# EUROPEAN PATENT APPLICATION

(11) **EP 4 711 396 A1**
(43) Date of publication of application: **18.03.2026**
(21) Application number: 24803496.9
(22) Date of filing: 08.05.2024
(51) Int. Cl.: C08G 59/20, C08G 59/40

(54) **CURABLE COMPOSITION**

(30) Priority: 08.05.2023 JP 2023076919
(71) Applicant: Tokyo University of Science, Tokyo 162-8601 (JP); TAIYO HOLDINGS CO., LTD., Saitama 355-0222 (JP)
(72) Inventor: ARIMITSU, Koji, Tokyo 162-8601 (JP); ISHIKAWA, Nobuhiro, Hiki-gun, Saitama 355-0222 (JP); YUKIMORI, Daiki, Hiki-gun, Saitama 355-0222 (JP); INOUE, Go, Hiki-gun, Saitama 355-0222 (JP); SHIBASAKI, Kaho, Hiki-gun, Saitama 355-0222 (JP); OKUDA, Ayano, Hiki-gun, Saitama 355-0222 (JP)
(74) Representative: Hoffmann Eitle
(86) International application number: PCT/JP2024/017098
(87) International publication number: WO 2024/232387

(57) **Abstract**

Provided is a curable composition excellent in low dielectric properties. An embodiment of the present invention is a curable composition containing a polysiloxane having an epoxy group and a compound represented by the following formula (1).

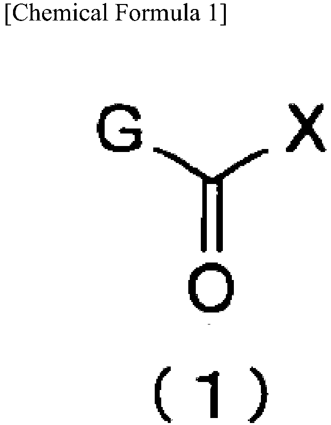

In the formula, G represents an organic group, and X represents a group represented by the following general formula (1)-11, (1)-12, (1)-13, or (1)-14.

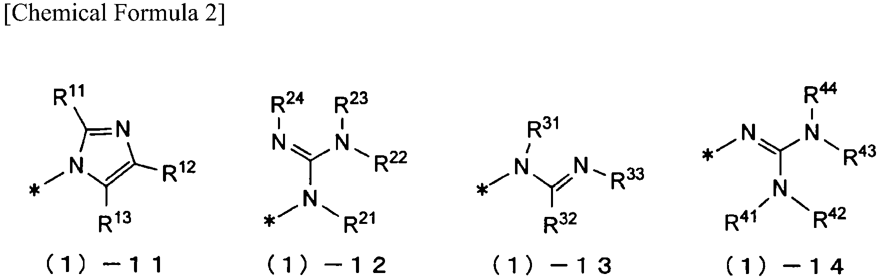

## Description

### Technical Field

The present invention relates to a curable composition.

### Background Art

Conventionally, microfabrication by a photolithography method has been performed in manufacture of a semiconductor device. The photolithography method is a method in which a layer made of a photosensitive composition is formed on a substrate such as a silicon wafer or a copper-clad laminate, light irradiation (exposure) in a predetermined pattern is performed, and then either an unexposed portion or an exposed portion is dissolved and removed with a developer to form a pattern.

A resin material constituting a semiconductor device and used in the photolithography method is required to have high insulation performance, chemical stability, adhesion to metal, and the like. Examples of a material that can be used in the photolithography method and satisfy such properties include a polysiloxane.

For example, Patent Literature 1 discloses a photosensitive resin composition containing a polysiloxane compound having a specific structure and a photoradical generator and capable of forming a fine pattern by photolithography.

### Citation List

### Patent Literature

Patent Literature 1: JP 2011-186069 A

### Summary of Invention

### Technical Problem

In recent years, with development of a semiconductor device and the like, there has been a demand for a composition capable of forming a cured product having low dielectric properties in order to reduce transmission loss even in a fine circuit, but a polysiloxane according to prior art may be inferior in low dielectric properties.

Therefore, an object of the present invention is to provide a curable composition containing a polysiloxane and capable of forming a cured product excellent in low dielectric properties.

### Solution to Problem

The present inventors have found that the above problems can be solved by a curable composition in which a specific polysiloxane and a specific compound are combined and blended, and have completed the present invention. That is, the present invention is as follows.

An embodiment of the present invention is a curable composition containing a polysiloxane having an epoxy group and a compound represented by the following formula (1).

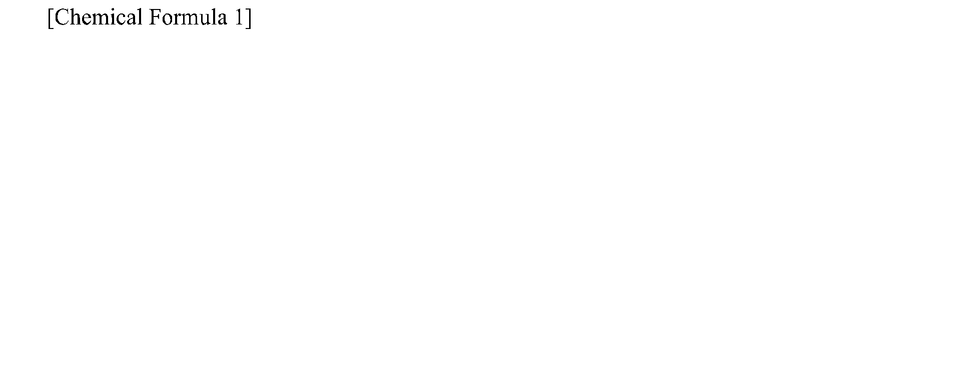

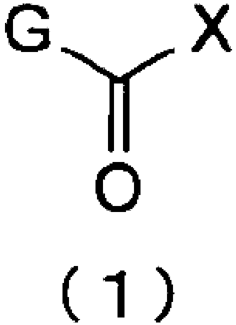

(In the formula, G represents an organic group, and X represents a group represented by the following general formula (1)-11, (1)-12, (1)-13, or (1)-14.)

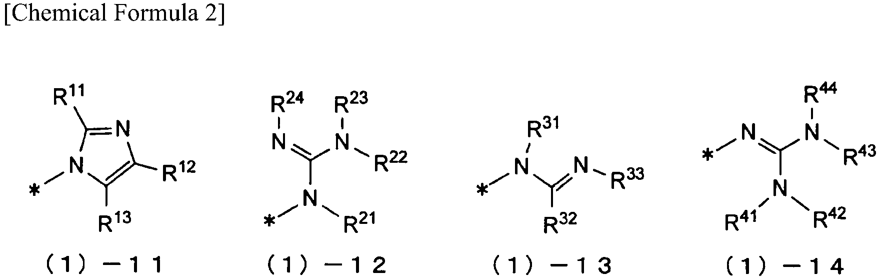

(In the formulas, R¹¹, R¹², R¹³, R²¹, R²², R²³, R²⁴, R³¹, R³², R³³, R⁴¹, R⁴², R⁴³, and R⁴⁴ each independently represent a hydrogen atom or a hydrocarbon group. When two or more of R¹¹, R¹², and R¹³ are hydrocarbon groups, the two or more hydrocarbon groups may be bonded to each other to form a ring, when two or more of R²¹, R²², R²³, and R²⁴ are hydrocarbon groups, the two or more hydrocarbon groups may be bonded to each other to form a ring, when two or more of R³¹, R³², and R³³ are hydrocarbon groups, the two or more hydrocarbon groups may be bonded to each other to form a ring, and when two or more of R⁴¹, R⁴², R⁴³, and R⁴⁴ are hydrocarbon groups, the two or more hydrocarbon groups may be bonded to each other to form a ring. * represents a bond connected to a carbon atom.)

The polysiloxane preferably has a functional group containing an unsaturated carbon bond.

The curable composition preferably further contains a photoradical generator.

The polysiloxane preferably contains a structural unit represented by the following formula (I) and a structural unit represented by the following formula (II).

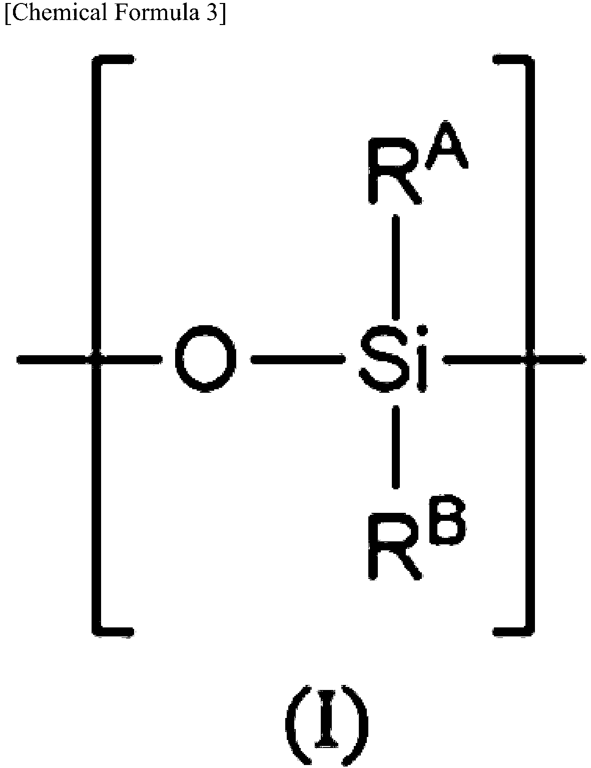

(In the formula, R^{A} represents a hydrogen atom, a hydroxy group, an alkoxy group, or a hydrocarbon group, and R^{B} represents a functional group containing an epoxy group.) 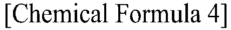 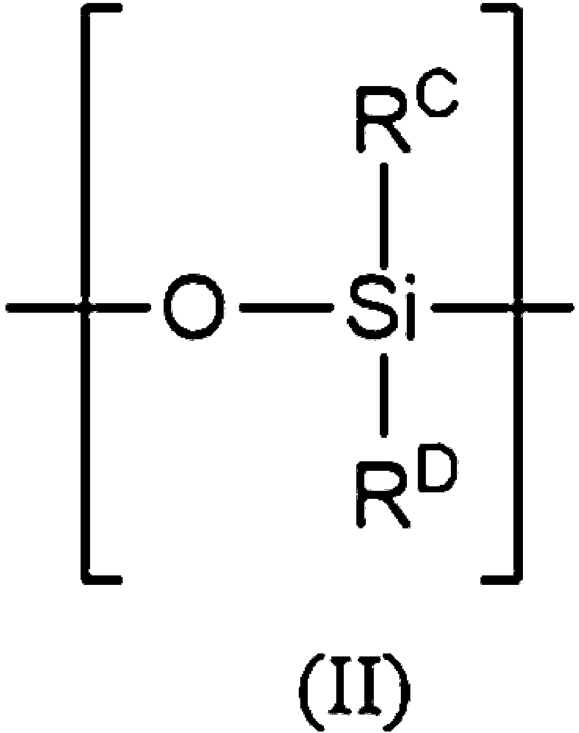 (In the formula, R^{C} represents a hydrogen atom, a hydroxy group, an alkoxy group, or a hydrocarbon group, and R^{D} represents a functional group containing an unsaturated double bond.)

### Advantageous Effects of Invention

According to the present invention, there is provided a curable composition capable of forming a cured product excellent in low dielectric properties.

### Description of Embodiments

When isomers are present in a described compound, all isomers that can be present are usable in the present disclosure unless otherwise specified.

In the present disclosure, an "unsaturated carbon bond" refers to an ethylenic or acetylenic carbon-carbon multiple bond (double bond or triple bond) unless otherwise specified.

In the present disclosure, a weight average molecular weight (Mw) and a number average molecular weight (Mn) of a polymer are determined by gel permeation chromatography (GPC). In GPC, Shodex K-805L is used as a column, a column temperature is 40°C, a flow rate is 1 mL/min, an eluent is chloroform, and a standard substance is polystyrene.

In the present disclosure, when an upper limit and a lower limit of a numerical range are described separately, it is assumed that all combinations of each lower limit and each upper limit are substantially described within a range having no contradiction.

Hereinafter, components of a curable composition will be described, and then a method for using the curable composition and an application thereof will be described.

### <<<<Components of curable composition>>>>

A curable composition of the present disclosure contains a polysiloxane having a specific structure and a specific compound (base amplifier).

The curable composition of the present disclosure preferably contains a photoradical generator.

The curable composition of the present disclosure may contain other components.

Each component will be described below.

### <<<Polysiloxane>>>

The polysiloxane according to the present disclosure has an epoxy group. By subjecting such a polysiloxane to a curing reaction with a base amplifier described later, a cured product excellent in low dielectric properties and the like is obtained.

Examples of the polysiloxane having an epoxy group preferably include a polysiloxane containing a structural unit represented by the formula (I) described later.

The polysiloxane according to the present disclosure preferably has a functional group containing an unsaturated carbon bond. By inclusion of an unsaturated carbon bond in the polysiloxane, the polysiloxane can be photocured. According to such a polysiloxane, it is possible to perform two curing reactions of a reaction by the above-described epoxy group and a photocuring reaction, the curable resin composition can be patterned by photolithography, and a cured product excellent in low dielectric properties and the like can be obtained.

Specific examples of a structure of the polysiloxane having functional groups containing an epoxy group and an unsaturated carbon bond include a polysiloxane containing a structural unit represented by the following formula (I) and a structural unit represented by the following formula (II).

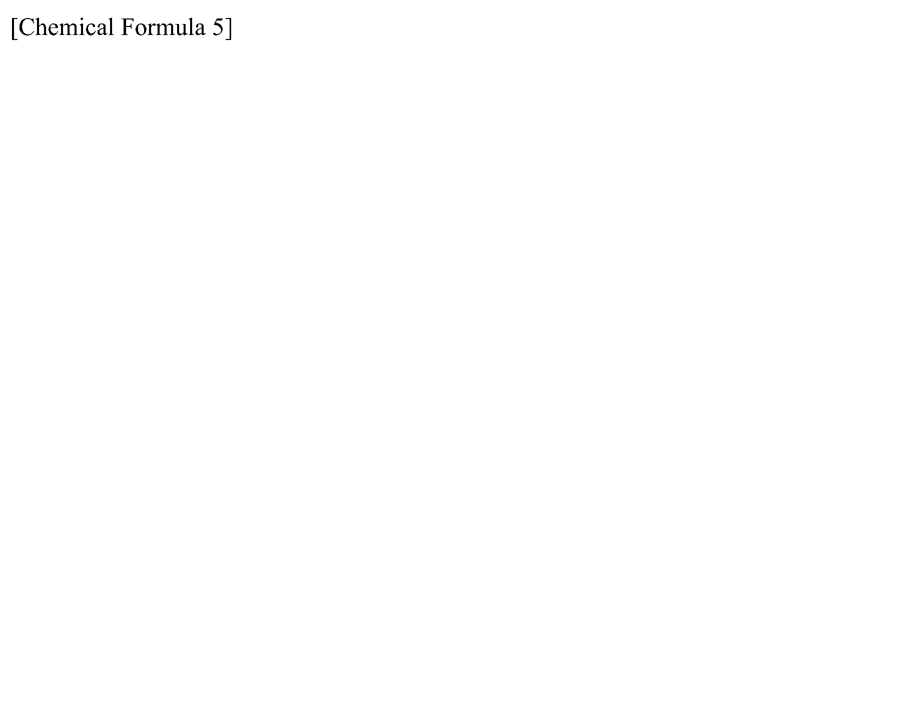

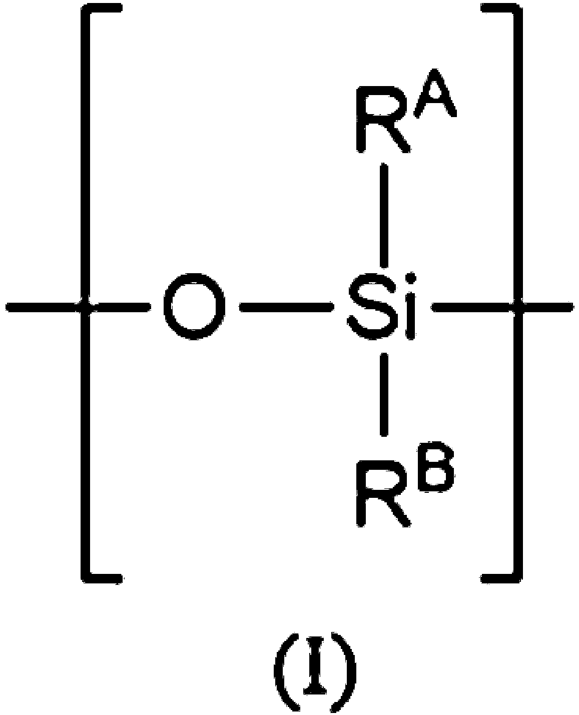

In the formula, R^{A} represents a hydrogen atom, a hydroxy group, an alkoxy group (preferably having 1 to 10, 1 to 5, or 1 to 3 carbon atoms), or a hydrocarbon group (preferably having 1 to 10, 1 to 5, or 1 to 3 carbon atoms), and R^{B} represents a functional group containing an epoxy group.

In R^{B} of the formula (I), the epoxy group is preferably present at the end of a side chain. More specifically, R^{B} is preferably a functional group represented by the following formula (I-1), and more preferably a functional group represented by the following formula (I-2).

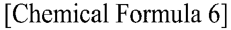

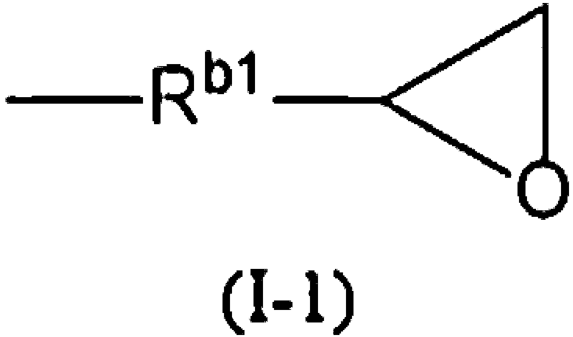

In the formula, R^{b1} represents a single bond or a hydrocarbon group (preferably having 1 to 20, 1 to 10, or 1 to 5 carbon atoms) which may contain a hetero atom (for example, a halogen atom, an oxygen atom, a nitrogen atom, or a sulfur atom).

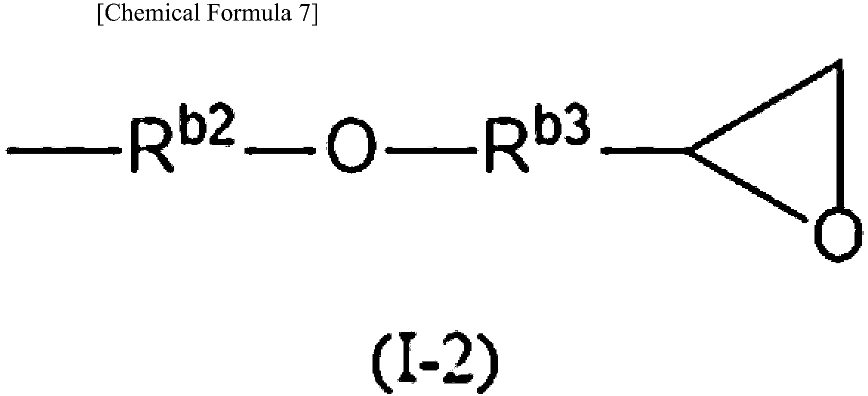

In the formula, R^{b2} represents a hydrocarbon group (preferably having 1 to 10, 1 to 5, or 2 to 5 carbon atoms), and R^{b3} represents a hydrocarbon group (preferably having 1 to 10, 1 to 5, or 1 to 3 carbon atoms).

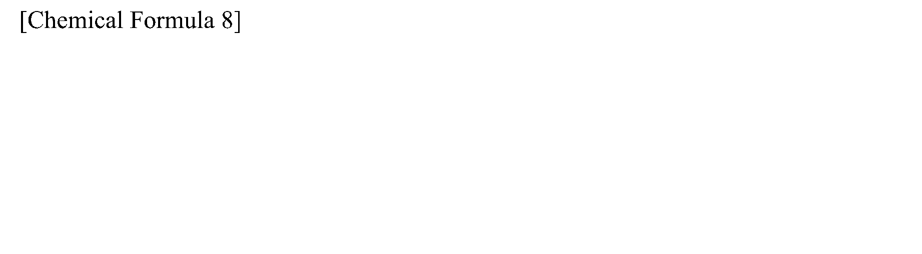

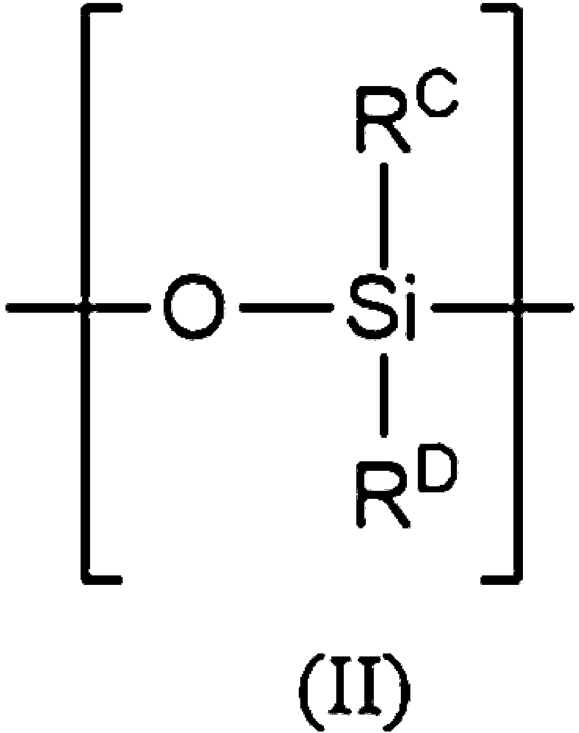

In the formula, R^{C} represents a hydrogen atom, a hydroxy group, an alkoxy group (preferably having 1 to 10, 1 to 5, or 1 to 3 carbon atoms), or a hydrocarbon group (preferably having 1 to 10, 1 to 5, or 1 to 3 carbon atoms), and R^{D} represents a functional group containing an unsaturated double bond.

In R^{D} of the formula (II), the unsaturated carbon bond is preferably present at the end of a side chain. More specifically, R^{D} is preferably a functional group represented by the following formula (II-1), and more preferably a functional group represented by the following formula (II-2).

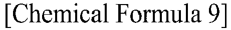

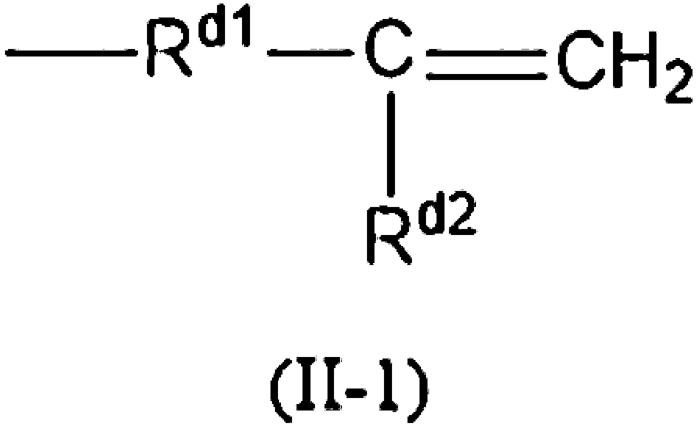

In the formula, R^{d1} represents a single bond or a hydrocarbon group (preferably having 1 to 10, 1 to 5, or 2 to 4 carbon atoms) which may contain a heteroatom (for example, a halogen atom, an oxygen atom, a nitrogen atom, or a sulfur atom), and R^{d2} represents a hydrogen atom or a hydrocarbon group (preferably having 1 to 5, or 1 or 2 carbon atoms).

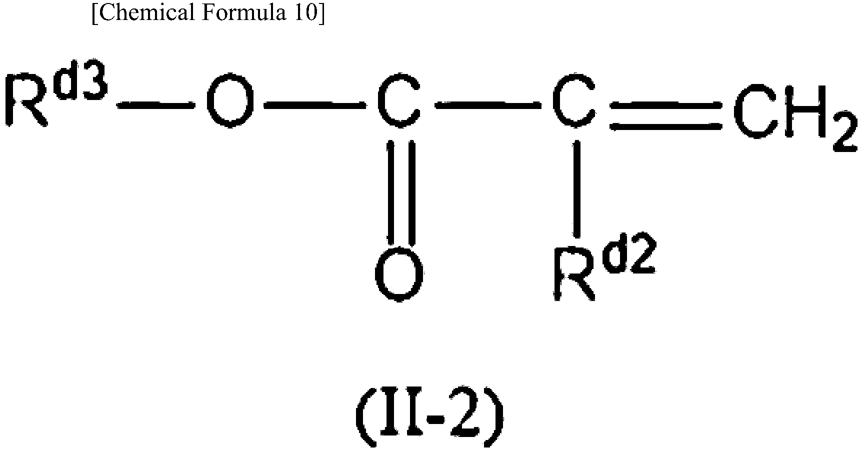

In the formula, R^{d3} represents a hydrocarbon group (preferably having 1 to 10, 1 to 5, or 2 to 4 carbon atoms), and R^{d2} represents a hydrogen atom or a methyl group.

A polysiloxane having the structural units represented by the formulas (I) and (II) has a structure extended by a siloxane bond between the structural unit represented by the formula (I) and the structural unit represented by the formula (II), a siloxane bond between the structural units represented by the formula (I), a siloxane bond between the structural units represented by the formula (II), or the like. The polysiloxane may be in a form of a block copolymer in which the structural unit represented by the formula (I) and the structural unit represented by the formula (II) are arranged in a predetermined order, or may be in a form of a random copolymer in which the structural unit represented by the formula (I) and the structural unit represented by the formula (II) are randomly arranged.

The polysiloxane according to the present disclosure may contain a structure other than the structural unit represented by the formula (I) and the structural unit represented by the formula (II). The content of the structural unit represented by the formula (I) in the polysiloxane or the total content of the structural unit represented by the formula (I) and the structural unit represented by the formula (II) in the polysiloxane is preferably 50% by mass or more, 60% by mass or more, 70% by mass or more, 80% by mass or more, 90% by mass or more, 95% by mass or more, or 99% by mass or more. When the polysiloxane contains both the structural unit represented by the formula (I) and the structural unit represented by the formula (II), a ratio (y/x) of the number y of repetitions of the structural unit represented by the formula (II) to the number x of repetitions of the structural unit represented by the formula (I) is preferably 0.05/0.95 to 0.70/0.30 or 0.10/0.90 to 0.60/0.40.

According to another expression, a preferable polysiloxane according to the present disclosure has a structure represented by the following formula (III).

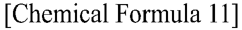

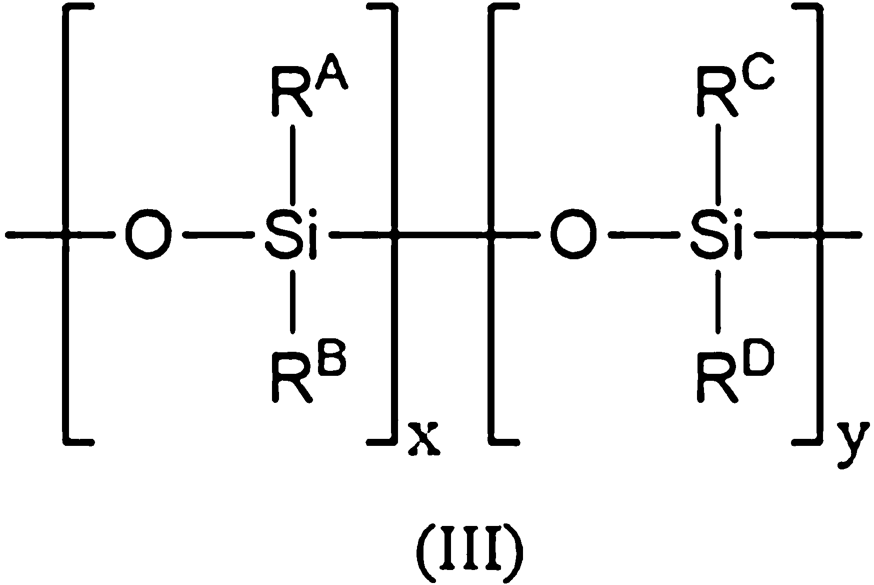

R^{A}, R^{B}, R^{C}, and R^{D} are as described above. x and y can be arbitrary values depending on the weight average molecular weight of the polysiloxane and the like. The ratio (y/x) of y to x is preferably 0.05/0.95 to 0.70/0.30 or 0.10/0.90 to 0.60/0.40. Note that the formula (III) does not mean only block copolymers, and includes random copolymers.

The polysiloxane may have a network structure. For example, the polysiloxane having the structural units represented by the formulas (I) and (II) may have, in a part thereof, a network structure in which the R^{A} moiety of the formula (I) and/or the R^{C} moiety of the formula (II) is replaced with a siloxane bond and bonded to another structural unit.

Preferably, the polysiloxane has a weight average molecular weight of 2,000 or more or 10,000 or more, and preferably 50,000 or less, 35,000 or less, or 25,000 or less. The polysiloxane has a polydispersity index (weight average molecular weight/number average molecular weight) of preferably 1.5 to 5.0, more preferably 1.5 to 2.0.

### <<Method for manufacturing polysiloxane>>

### <Raw material/monomer>

The polysiloxane having an epoxy group can be manufactured, for example, by polymerizing a monomer containing a silane component (A) represented by the following formula (I-A).

The polysiloxane having functional groups containing an epoxy group and an unsaturated double bond can be manufactured, for example, by polymerizing a monomer containing the silane component (A) represented by the following formula (I-A) and a silane component (B) represented by the following formula (II-A).

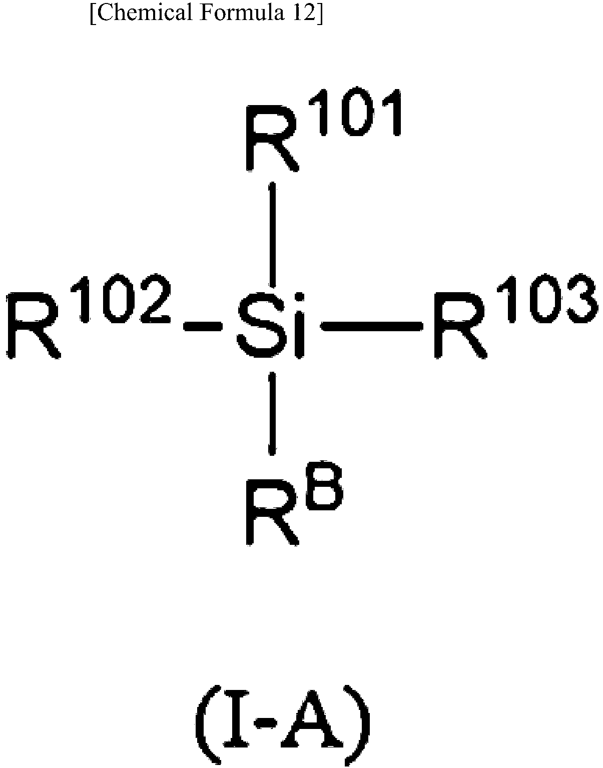

In the formula, R¹⁰¹ represents a hydrogen atom, a hydroxy group, an alkoxy group (having, for example, 1 to 10, 1 to 5, or 1 to 3 carbon atoms) or a hydrocarbon group (having, for example, 1 to 10, 1 to 5, or 1 to 3 carbon atoms), R¹⁰² and R¹⁰³ each independently represent a hydroxy group or an alkoxy group, and R^{B} represents a functional group containing an epoxy group and is similar to R^{B} in the formula (I).

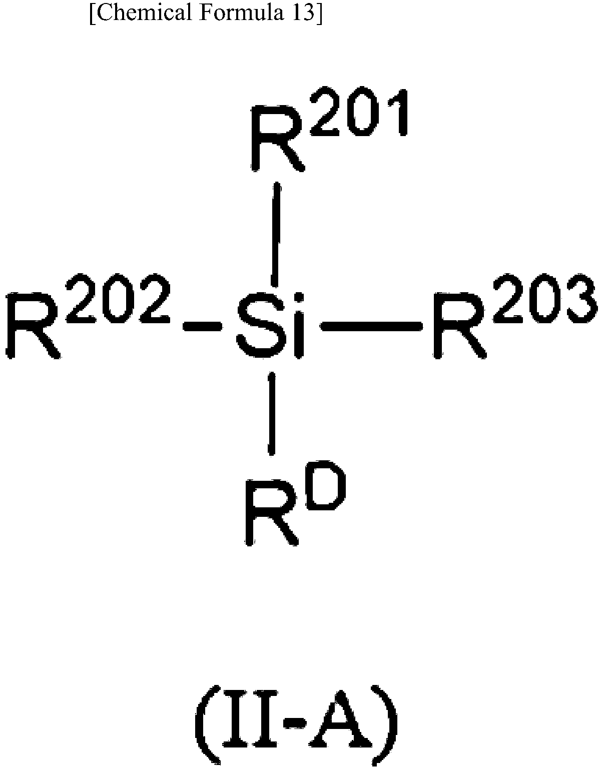

In the formula, R²⁰¹ represents a hydrogen atom, a hydroxy group, an alkoxy group (having, for example, 1 to 10, 1 to 5, or 1 to 3 carbon atoms) or a hydrocarbon group (having, for example, 1 to 10, 1 to 5, or 1 to 3 carbon atoms), R²⁰² and R²⁰³ each independently represent a hydroxy group or an alkoxy group, and R^{D} represents a functional group containing an unsaturated double bond and is similar to R^{D} in the formula (II).

As a method for synthesizing a polysiloxane using these monomers, a conventionally known method can be used. For example, a synthesis composition containing silane components (or a mixture of silane components and partial hydrolyzates of the silane components) and water as necessary is prepared, and the silane components are subjected to a condensation reaction in the presence of a catalyst while being heated as necessary, whereby a polysiloxane can be synthesized. In addition, removal of the catalyst (for example, neutralization), distillation of the polysiloxane, and the like may be performed as necessary.

By using the silane component (A) represented by the formula (I-A) as a raw material, a preferable polysiloxane having a repeating structure formed of a structural unit containing an epoxy group is obtained.

In addition, by using the silane component (A) represented by the formula (I-A) and the silane component (B) represented by the formula (II-A) as raw materials, a preferable polysiloxane having a repeating structure formed of a structural unit containing an epoxy group and a structural unit having a functional group containing an unsaturated double bond is obtained. At this time, by changing the molar ratio between the silane component (A) and the silane component (B), the ratio (y/x) between the structural units of a polysiloxane to be obtained can be adjusted.

The catalyst is not particularly limited, and an organic acid (for example, formic acid, acetic acid, oxalic acid, maleic acid, or citric acid), an inorganic acid (hydrochloric acid, nitric acid, phosphoric acid, sulfuric acid, or the like), or the like can be used.

Note that the synthesis composition may contain an organic solvent as necessary.

The polysiloxane having an epoxy group may be manufactured by modifying a side chain of a polysiloxane with a functional group containing an epoxy group. The polysiloxane having a functional group containing an unsaturated double bond may be manufactured by modifying a side chain of a polysiloxane with a functional group containing an unsaturated double bond.

### <<<Base amplifier>>>

As the base amplifier, those disclosed in WO 2020/045458 A can be used. More specifically, the base amplifier is a compound having a structure represented by the following formula (1).

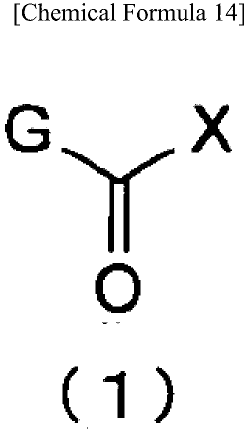

In the formula, G represents an organic group, and X represents a group represented by the following general formula (1)-11, (1)-12, (1)-13, or (1)-14.

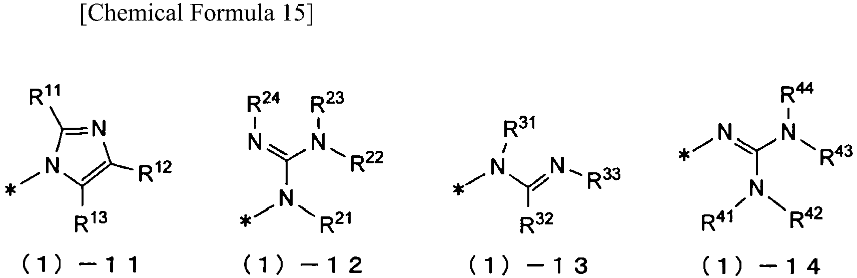

In the formulas, R¹¹, R¹², R¹³, R²¹, R²², R²³, R²⁴, R³¹, R³², R³³, R⁴¹, R⁴², R⁴³, and R⁴⁴ each independently represent a hydrogen atom or a hydrocarbon group. When two or more of R¹¹, R¹², and R¹³ are hydrocarbon groups, the two or more hydrocarbon groups may be bonded to each other to form a ring, when two or more of R²¹, R²², R²³, and R²⁴ are hydrocarbon groups, the two or more hydrocarbon groups may be bonded to each other to form a ring, when two or more of R³¹, R³², and R³³ are hydrocarbon groups, the two or more hydrocarbon groups may be bonded to each other to form a ring, and when two or more of R⁴¹, R⁴², R⁴³, and R⁴⁴ are hydrocarbon groups, the two or more hydrocarbon groups may be bonded to each other to form a ring. * represents a bond connected to a carbon atom of a carbonyl group.

The compound represented by the general formula (1) is a compound having a carboxylic acid amide bond formed by bonding of a nitrogen atom in X to a carbon atom of a carbonyl group.

In addition, the compound represented by the general formula (1) has a property that a bond between a carbonyl group and X present in the structure is cleaved under a specific condition, and a nitrogen atom in X that was bonded to a carbon atom of the carbonyl group generates a basic compound (also simply referred to as a "base" in the present specification) having a structure bonded to a hydrogen atom. This property will be described later.

As described later, the compound represented by the general formula (1) has a base converting action of expressing a base by an action of a base and a base amplifying action of reacting with a hydroxy group or the like to generate a base.

In the general formula (1), G is an organic group.

The organic group is not particularly limited, and can be appropriately selected from a monovalent or divalent group containing a carbon atom as a constituent atom, and is preferably a divalent group containing a carbon atom. In the present disclosure, an organic group that forms an ester structure or an amide structure with an adjacent carbonyl group can be used as the monovalent group containing a carbon atom. When the organic group is an organic group that forms an ester structure or an amide structure with an adjacent carbonyl group, for example, moieties other than a moiety that forms an ester structure or an amide structure with an adjacent carbonyl group may be substituents having a hydrocarbon group or the like.

When the organic group is an organic group that forms an ester structure or an amide structure with an adjacent carbonyl group, the compound represented by the general formula (1) preferably contains at least one compound selected from the group consisting of a compound represented by the following general formula (1)-A and a compound represented by the following general formula (1)-B.

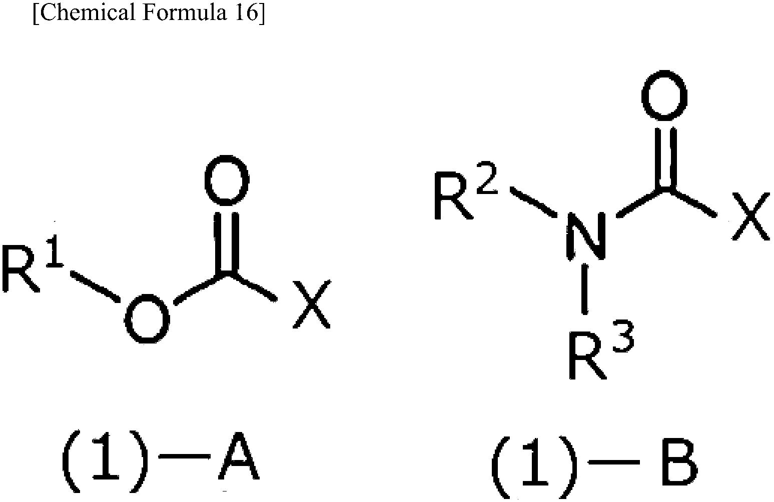

In the formula, R¹ represents an organic group, and R² and R³ each independently represent a hydrogen atom or an organic group. X each independently represent a group represented by the above general formula (1)-11, (1)-12, (1)-13, or (1)-14. At least one of R² and R³ represents an organic group, and when R² and R³ are organic groups, the organic groups may be bonded to each other to form a ring.

Examples of the organic group in G in the general formula (1), R¹ in the general formula (1)-A, or R² and R³ in the general formula (1)-B include a hydrocarbon group which may have a substituent.

Here, "a hydrocarbon group has a substituent" means that one or more hydrogen atoms constituting a hydrocarbon group are replaced with a group (substituent) other than a hydrogen atom, or one or more carbon atoms constituting a hydrocarbon group or the carbon atoms and one or more hydrogen atoms bonded to the carbon atoms are replaced with a group (substituent) different from the carbon atoms or the carbon atoms to which one or more hydrogen atoms are bonded. Both the hydrogen atom and the carbon atom may be replaced with substituents.

The hydrocarbon group may be either an aliphatic hydrocarbon group or an aromatic hydrocarbon group (aryl group), may be an aliphatic hydrocarbon group in which one or more hydrogen atoms are replaced with an aromatic hydrocarbon group, or may be a polycyclic hydrocarbon group formed by condensation of a cyclic aliphatic hydrocarbon group and an aromatic hydrocarbon group.

The aliphatic hydrocarbon group may be either a saturated aliphatic hydrocarbon group (alkyl group) or an unsaturated aliphatic hydrocarbon group.

The alkyl group may be linear, branched, or cyclic, and may be monocyclic or polycyclic when the alkyl group is cyclic. The alkyl group preferably has 1 to 20 carbon atoms.

The linear or branched alkyl group preferably has 1 to 20 carbon atoms.

Examples of the linear or branched alkyl group include a methyl group, an ethyl group, an n-propyl group, an isopropyl group, a n-butyl group, an isobutyl group, a secbutyl group, a tert-butyl group, a n-pentyl group, an isopentyl group, a neopentyl group, a tert-pentyl group, a 1-methylbutyl group, a n-hexyl group, a 2-methylpentyl group, a 3-methylpentyl group, a 2,2-dimethylbutyl group, a 2,3-dimethylbutyl group, a n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, a n-octyl group, an isooctyl group, a 2-ethylhexyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group.

The cyclic alkyl group preferably has 3 to 20 carbon atoms.

Examples of the cyclic alkyl group include a cyclopropyl group, a cyclobutyl group, a cyclopentyl group, a cyclohexyl group, a cycloheptyl group, a cyclooctyl group, a cyclononyl group, a cyclodecyl group, a norbornyl group, an isobornyl group, a 1-adamantyl group, a 2-adamantyl group, and a tricyclodecyl group, and further include those in which one or more hydrogen atoms of these cyclic alkyl groups are replaced with a linear, branched, or cyclic alkyl group. Here, examples of the linear, branched, or cyclic alkyl group whose hydrogen atom is replaced include those exemplified as the alkyl group.

The unsaturated aliphatic hydrocarbon group may be linear, branched, or cyclic.

In a case of a cyclic unsaturated aliphatic hydrocarbon group, the unsaturated aliphatic hydrocarbon group may be either monocyclic or polycyclic, and the unsaturated aliphatic hydrocarbon group preferably has 2 to 20 carbon atoms.

Examples of the unsaturated aliphatic hydrocarbon group include a group in which one or more single bonds (C-C) between carbon atoms in the alkyl group are replaced with a double bond (C=C) or a triple bond (C≡C) that is an unsaturated bond.

In the unsaturated aliphatic hydrocarbon group, the number of unsaturated bonds may be only one, or two or more, and when the number of unsaturated bonds is two or more, these unsaturated bonds may include only double bonds, only triple bonds, or double bonds and triple bonds in a mixed manner.

In the unsaturated aliphatic hydrocarbon group, the position of the unsaturated bond is not particularly limited.

Preferable examples of the unsaturated aliphatic hydrocarbon group include a linear or branched alkenyl group and alkynyl group, and a cyclic cycloalkenyl group and cycloalkynyl group, which correspond to those having one unsaturated bond.

Examples of the alkenyl group include an ethenyl group (vinyl group), a 2-propenyl group (allyl group), and a cyclohexenyl group.

The aryl group may be either monocyclic or polycyclic, and preferably has 6 to 20 carbon atoms. Examples of such an aryl group include a phenyl group, a 1-naphthyl group, a 2-naphthyl group, an o-tolyl group, a m-tolyl group, a p-tolyl group, and a xylyl group (dimethylphenyl group), and also include those in which one or more hydrogen atoms of these aryl groups are further replaced with these aryl groups or the above-described alkyl groups. These aryl groups having a substituent preferably have 6 to 20 carbon atoms including the substituent.

Examples of the aliphatic hydrocarbon group in which one or more hydrogen atoms are replaced with an aromatic hydrocarbon group (aryl group) among the hydrocarbon groups include an arylalkyl group (aralkyl group) such as a phenylmethyl group (benzyl group) or a 2-phenylethyl group (phenethyl group) when one hydrogen atom is replaced.

Examples of the substituent with which one or more hydrogen atoms are replaced in the hydrocarbon group include an alkoxy group, an aryloxy group, a dialkylamino group, a diarylamino group, an alkylarylamino group, an alkylcarbonyl group, an arylcarbonyl group, a heteroarylcarbonyl group, an alkyloxycarbonyl group, an aryloxycarbonyl group, an alkylcarbonyloxy group, an arylcarbonyloxy group, an alkylthio group, an arylthio group, an oxygen atom (-O-), a cyano group (-CN), a halogen atom, a nitro group, a haloalkyl group (halogenated alkyl group), a hydroxy group (-OH), and a mercapto group (-SH).

In the hydrocarbon group, the number of the substituents with which hydrogen atoms are replaced may be only one, or two or more, and all hydrogen atoms may be replaced with the substituents.

When the number of the substituents with which hydrogen atoms are replaced in the hydrocarbon group is two or more, these substituents may be all the same, may be all different, or may be only partially the same.

Examples of the alkoxy group as a substituent include a monovalent group in which the alkyl group is bonded to an oxygen atom, such as a methoxy group, an ethoxy group, an n-propoxy group, an isopropoxy group, or a cyclopropoxy group.

Examples of the aryloxy group as a substituent include a monovalent group in which the aryl group is bonded to an oxygen atom, such as a phenyloxy group (phenoxy group), a 1-naphthyloxy group, or a 2-naphthyloxy group.

Examples of the dialkylamino group as a substituent include a monovalent group in which two hydrogen atoms of an amino group (-NH₂) are replaced with the alkyl groups, such as a dimethylamino group or a methylethylamino group. In the dialkylamino group, the two alkyl groups bonded to a nitrogen atom may be the same as or different from each other.

Examples of the diarylamino group as a substituent include a monovalent group in which two hydrogen atoms of an amino group are replaced with the aryl groups, such as a diphenylamino group or a phenyl-1-naphthylamino group. **In** the diarylamino group, the two aryl groups bonded to a nitrogen atom may be the same as or different from each other.

Examples of the alkylarylamino group as a substituent include a monovalent group in which one hydrogen atom out of two hydrogen atoms of an amino group is replaced with the alkyl group and one hydrogen atom is replaced with the aryl group, such as a methylphenylamino group.

Examples of the alkylcarbonyl group as a substituent include a monovalent group in which the alkyl group is bonded to a carbonyl group (-C(=O)-), such as a methylcarbonyl group (acetyl group).

Examples of the arylcarbonyl group as a substituent include a monovalent group in which the aryl group is bonded to a carbonyl group, such as a phenylcarbonyl group (benzoyl group).

Examples of the heteroarylcarbonyl group as a substituent include a monovalent group in which an aromatic heterocyclic group (heteroaryl group) and a carbonyl group are bonded to each other, such as an imidazolylcarbonyl group, a pyrazolylcarbonyl group, or a pyrazinylcarbonyl group.

Examples of the alkyloxycarbonyl group as a substituent include a monovalent group in which the alkoxy group is bonded to a carbonyl group, such as a methyloxycarbonyl group (methoxycarbonyl group).

Examples of the aryloxycarbonyl group as a substituent include a monovalent group in which the aryloxy group is bonded to a carbonyl group, such as a phenyloxycarbonyl group (phenoxycarbonyl group).

Examples of the alkylcarbonyloxy group as a substituent include a monovalent group in which the alkyl group is bonded to a carbon atom of a carbonyloxy group (-C(=O)-O-), such as a methylcarbonyloxy group.

Examples of the arylcarbonyloxy group as a substituent include a monovalent group in which the aryl group is bonded to a carbon atom of a carbonyloxy group, such as a phenylcarbonyloxy group.

Examples of the alkylthio group as a substituent include monovalent group in which the alkyl group is bonded to a sulfur atom, such as a methylthio group, an ethylthio group, a n-propylthio group, an isopropylthio group, or a cyclopropylthio group.

Examples of the arylthio group as a substituent include a monovalent group in which the aryl group is bonded to a sulfur atom, such as a phenylthio group, a 1-naphthylthio group, or a 2-naphthylthio group.

Examples of the halogen atom as a substituent include a fluorine atom (-F), a chlorine atom (-Cl), a bromine atom (-Br), and an iodine atom (-I).

Examples of the haloalkyl group as a substituent include a group in which one or more hydrogen atoms of the alkyl group are replaced with a halogen atom.

Examples of the halogen atom in the haloalkyl group include those exemplified as the halogen atom as a substituent.

The number of halogen atoms in the haloalkyl group is not particularly limited, and may be one, or two or more. When the number of halogen atoms in the haloalkyl group is two or more, the plurality of halogen atoms may be all the same, may be all different, or may be only partially the same. The haloalkyl group may be a perhaloalkyl group in which all hydrogen atoms in an alkyl group are replaced with halogen atoms.

Examples of the haloalkyl group include a chloromethyl group, a dichloromethyl group, a trichloromethyl group, and a trifluoromethyl group, but are not limited thereto.

In the hydrocarbon group, the number of the substituents with which hydrogen atoms are replaced is preferably 1 to 4, more preferably 1 to 3, and particularly preferably 1 or 2, depending on the number of hydrogen atoms that can be replaced.

Examples of the substituent with which one or more carbon atoms or the carbon atoms and one or more hydrogen atoms bonded to the carbon atoms are replaced in the hydrocarbon group include a heteroatom such as a nitrogen atom, an oxygen atom, or a sulfur atom.

In the hydrocarbon group, the number of the substituents with which a carbon atom or a carbon atom to which a hydrogen atom is bonded is replaced may be only one, or two or more, and all carbon atoms may be replaced with substituents alone or together with hydrogen atoms bonded to the carbon atoms.

In the hydrocarbon group, when there are two or more substituents with which carbon atoms or carbon atoms to which hydrogen atoms are bonded are replaced, these substituents may be all the same, may be all different, or may be only partially the same.

Examples of the aromatic hydrocarbon group, that is, the aromatic heterocyclic group (heteroaryl group) among the hydrocarbon groups having a substituent of a heteroatom include a group obtained by removing, from each of various aromatic heterocyclic compounds, one hydrogen atom bonded to a carbon atom or a heteroatom constituting a ring skeleton of each of the aromatic heterocyclic compounds.

Preferable examples of the aromatic heterocyclic compound include a sulfur-containing aromatic heterocyclic compound (a compound having one or more sulfur atoms as atoms constituting an aromatic heterocyclic skeleton), a nitrogen-containing aromatic heterocyclic compound (a compound having one or more nitrogen atoms as atoms constituting an aromatic heterocyclic skeleton), an oxygen-containing aromatic heterocyclic compound (a compound having one or more oxygen atoms as atoms constituting an aromatic heterocyclic skeleton), and a compound having two heteroatoms different from each other selected from a sulfur atom, a nitrogen atom, and an oxygen atom as atoms constituting an aromatic heterocyclic skeleton.

Examples of the sulfur-containing aromatic heterocyclic compound include thiophene and benzothiophene.

Examples of the nitrogen-containing aromatic heterocyclic compound include pyrrole, imidazole, pyrazole, pyridine, pyrazine, pyrimidine, pyridazine, triazine, indole, isoindole, benzimidazole, purine, indazole, quinoline, isoquinoline, quinoxaline, quinazoline, and cinnoline.

Examples of the oxygen-containing aromatic heterocyclic compound include furan, benzofuran (1-benzofuran), and isobenzofuran (2-benzofuran).

Examples of the above-described compound having two heteroatoms different from each other as atoms constituting an aromatic heterocyclic skeleton include oxazole, isoxazole, thiazole, benzoxazole, benzisoxazole, and benzothiazole.

In the hydrocarbon group, the number of substituents with which a carbon atom or a carbon atom to which a hydrogen atom is bonded is replaced is preferably 1 to 3, and more preferably 1 or 2, depending on a carbon atom that can be replaced.

Among the above, examples of G in the general formula (1) include an alkoxy group in which one hydrogen atom of an alkyl group is replaced with a carbonyl group, and a replaced aryl group in which one hydrogen atom of an aryl group is replaced with a substituent (preferably a phenyl group having a heteroarylcarbonyl group as a substituent).

In a case of a compound in which G is an alkoxy group, a compound represented by the general formula (1)-A is suitable.

The organic groups in R¹ to R³ in the general formulas (1)-A and (1)-B are each independently preferably an alkyl group which may have a substituent, an alkenyl group which may have a substituent, an aryl group which may have a substituent, a heteroaryl group which may have a substituent, or an arylalkyl group which may have a substituent, and more preferably an alkyl group which may have a substituent.

The substituent here is similar to the substituent described above as a substituent contained in a hydrocarbon group.

Among these, preferably, R¹ and R² are each independently an alkyl group which may have a substituent, an alkenyl group which may have a substituent, an aryl group which may have a substituent, a heteroaryl group which may have a substituent, or an arylalkyl group which may have a substituent, and R³ is a hydrogen atom, and more preferably, R¹ and R² are each an alkyl group which may have a substituent, and R³ is a hydrogen atom.

G in the general formula (1) preferably has a divalent group containing a carbon atom, and examples thereof include a hydrocarbon group which may have a substituent. Examples of the hydrocarbon group which may have a substituent include hydrocarbon groups similar to those described above, and an aromatic hydrocarbon group is particularly preferable.

When G in the general formula (1) is a divalent group, the compound represented by the general formula (1) is preferably a compound represented by the following general formula (1)-C.

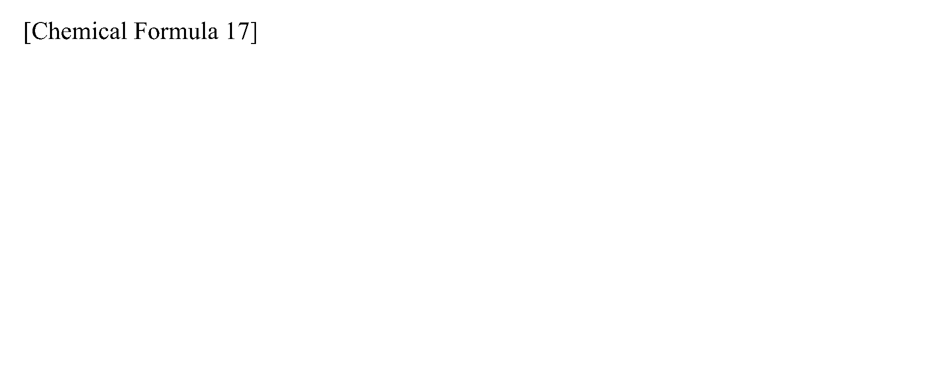

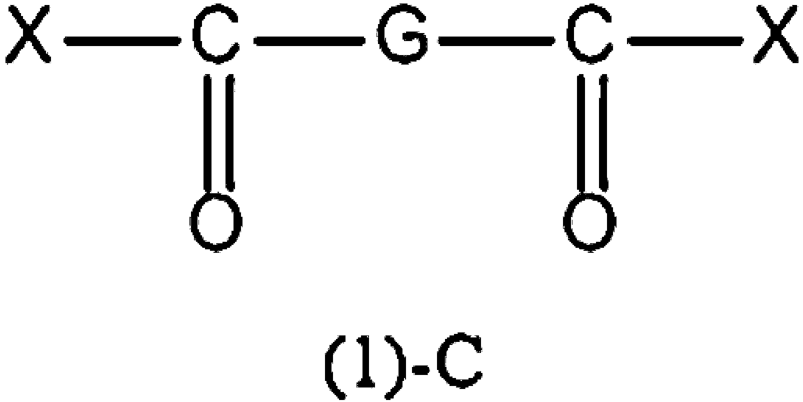

The two Xs contained in the formula (1)-C may be groups having different structures or groups having the same structure.

Next, X in the above general formulas (1), (1)-A, (1)-B, and (1)-C will be described.

X is a group represented by the general formula (1)-11, (1)-12, (1)-13, or (1)-14.

In addition, the bond denoted by the symbol * is formed to a carbon atom to which X is bonded, that is, a carbon atom in a carbonyl group to which G is bonded in the general formula (1).

In the general formula (1)-11, (1)-12, (1)-13, or (1)-14, R¹¹, R¹², R¹³, R²¹, R²², R²³, R²⁴, R³¹, R³², R³³, R⁴¹, R⁴², R⁴³, and R⁴⁴ are each independently a hydrogen atom or a hydrocarbon group.

That is, R¹¹, R¹², and R¹³ (hereinafter, also abbreviated as "R¹¹ to R¹³") in the general formula (1)-11 may all be the same, may all be different, or may be partially the same.

Similarly, R²¹, R²², R²³, and R²⁴ (hereinafter, also abbreviated as "R²¹ to R²⁴") in the general formula (1)-12 may all be the same, may all be different, or may be partially the same.

Similarly, R³¹, R³², and R³³ (hereinafter, also abbreviated as "R³¹ to R³³") in the general formula (1)-13 may all be the same, may all be different, or may be partially the same.

Similarly, R⁴¹, R⁴², R⁴³, and R⁴⁴ (hereinafter, also abbreviated as "R⁴¹ to R⁴⁴") in the general formula (1)-14 may all be the same, may all be different, or may be partially the same.

The hydrocarbon group in R¹¹ to R¹³, R²¹ to R²⁴, R³¹ to R³³, and R⁴¹ to R⁴⁴ may be either an aliphatic hydrocarbon group or an aromatic hydrocarbon group (aryl group), may be an aliphatic hydrocarbon group in which one or more hydrogen atoms are replaced with an aromatic hydrocarbon group, or may be a polycyclic hydrocarbon group formed by condensation of a cyclic aliphatic hydrocarbon group and an aromatic hydrocarbon group.

The aliphatic hydrocarbon group may be either a saturated aliphatic hydrocarbon group (alkyl group) or an unsaturated aliphatic hydrocarbon group.

The alkyl group may be linear, branched, or cyclic, and may be monocyclic or polycyclic when the alkyl group is cyclic. The alkyl group preferably has 1 to 20 carbon atoms.

The linear or branched alkyl group preferably has 1 to 20 carbon atoms.

Examples of the linear or branched alkyl group include a methyl group, an ethyl group, an n-propyl group, an isopropyl group, a n-butyl group, an isobutyl group, a secbutyl group, a tert-butyl group, a n-pentyl group, an isopentyl group, a neopentyl group, a tert-pentyl group, a 1-methylbutyl group, a n-hexyl group, a 2-methylpentyl group, a 3-methylpentyl group, a 2,2-dimethylbutyl group, a 2,3-dimethylbutyl group, a n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, a n-octyl group, an isooctyl group, a 2-ethylhexyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group.

The cyclic alkyl group preferably has 3 to 20 carbon atoms.

Examples of the cyclic alkyl group include a cyclopropyl group, a cyclobutyl group, a cyclopentyl group, a cyclohexyl group, a cycloheptyl group, a cyclooctyl group, a cyclononyl group, a cyclodecyl group, a norbornyl group, an isobornyl group, a 1-adamantyl group, a 2-adamantyl group, and a tricyclodecyl group, and further include those in which one or more hydrogen atoms of these cyclic alkyl groups are replaced with a linear, branched, or cyclic alkyl group. Here, examples of the linear, branched, or cyclic alkyl group whose hydrogen atom is replaced include those exemplified as the alkyl group.

The unsaturated aliphatic hydrocarbon group may be linear, branched, or cyclic.

In a case of a cyclic unsaturated aliphatic hydrocarbon group, the unsaturated aliphatic hydrocarbon group may be either monocyclic or polycyclic, and the unsaturated aliphatic hydrocarbon group preferably has 2 to 20 carbon atoms.

Examples of the unsaturated aliphatic hydrocarbon group include a group in which one or more single bonds (C-C) between carbon atoms in the alkyl group are replaced with a double bond (C=C) or a triple bond (C≡C) that is an unsaturated bond.

In the unsaturated aliphatic hydrocarbon group, the number of unsaturated bonds may be only one, or two or more, and when the number of unsaturated bonds is two or more, these unsaturated bonds may include only double bonds, only triple bonds, or double bonds and triple bonds in a mixed manner.

In the unsaturated aliphatic hydrocarbon group, the position of the unsaturated bond is not particularly limited.

Preferable examples of the unsaturated aliphatic hydrocarbon group include a linear or branched alkenyl group and alkynyl group, and a cyclic cycloalkenyl group and cycloalkynyl group, which correspond to those having one unsaturated bond.

Examples of the alkenyl group include an ethenyl group (vinyl group), a 2-propenyl group (allyl group), and a cyclohexenyl group.

The aryl group may be either monocyclic or polycyclic, and preferably has 6 to 20 carbon atoms. Examples of such an aryl group include a phenyl group, a 1-naphthyl group, a 2-naphthyl group, an o-tolyl group, a m-tolyl group, a p-tolyl group, and a xylyl group (dimethylphenyl group), and also include those in which one or more hydrogen atoms of these aryl groups are further replaced with these aryl groups or the above-described alkyl groups. These aryl groups having a substituent preferably have 6 to 20 carbon atoms including the substituent.

In the general formula (1)-11, when two or more of R¹¹, R¹², and R¹³ are hydrocarbon groups, these hydrocarbon groups may be bonded to each other to form a ring together with carbon atoms to which these hydrocarbon groups are bonded (carbon atoms constituting an imidazole skeleton). Here, "two or more hydrocarbon groups are bonded to each other" means that only two or all (three) of R¹¹ to R¹³ are hydrocarbon groups and only any two of the hydrocarbon groups are bonded to each other, or all (three) of R¹¹ to R¹³ are hydrocarbon groups and all these hydrocarbon groups are bonded to each other. In any case, it is assumed that carbon atoms of these hydrocarbon groups are bonded to each other.

When two or more hydrocarbon groups are bonded to each other, the positions (bonding positions) of carbon atoms to be bonded are not particularly limited. For example, when the hydrocarbon group to be bonded is linear or branched, the bonding position may be a terminal carbon atom of the hydrocarbon group, may be a so-called root carbon atom directly bonded to a carbon atom constituting an imidazole skeleton of the hydrocarbon group, or may be a carbon atom at an intermediate position between the terminal and the root. On the other hand, when the hydrocarbon group to be bonded is cyclic or has both a chain structure and a cyclic structure, the bonding position may be a root carbon atom or another carbon atom.

When two hydrocarbon groups of R¹¹ to R¹³ are bonded to each other, a ring formed by these groups may be either monocyclic or polycyclic. The group represented by the general formula (1)-11 has a structure in which an imidazole skeleton and a ring formed by mutual bonding of these hydrocarbon groups are condensed.

When two or more of R²¹, R²², R²³, and R²⁴ in the general formula (1)-12 are hydrocarbon groups, these hydrocarbon groups may be bonded to each other to form a ring together with nitrogen atoms to which these hydrocarbon groups are bonded and a carbon atom bonded to these nitrogen atoms (the same carbon atom to which three nitrogen atoms are bonded together). Here, "two or more hydrocarbon groups are bonded to each other" means a similar one to the case where any of the hydrocarbon groups of R¹¹ to R¹³ are bonded to each other as described above. Examples of a case of such bonding include a case where only two, three, or all (four) of R²¹ to R²⁴ are hydrocarbon groups and only any two or three hydrocarbon groups are bonded to each other, and a case where all (four) of R²¹ to R²⁴ are hydrocarbon groups and all these hydrocarbon groups are bonded to each other, and how the hydrocarbon groups are bonded to each other is similar to that in the case of R¹¹ to R¹³

In the general formula (1)-13, when two or more of R³¹, R³², and R³³ are hydrocarbon groups, these hydrocarbon groups may be bonded to each other to form a ring together with a nitrogen atom or a carbon atom to which these hydrocarbon groups are bonded and a carbon atom bonded to this nitrogen atom or a nitrogen atom bonded to the carbon atom. Here, "two or more hydrocarbon groups are bonded to each other" means a similar one to the case where any of the hydrocarbon groups of R¹¹ to R¹³ are bonded to each other as described above. Examples of a case of such bonding include a case where only two or all (three) of R³¹ to R³³ are hydrocarbon groups and only any two hydrocarbon groups are bonded to each other, and a case where all (three) of R³¹ to R³³ are hydrocarbon groups and all these hydrocarbon groups are bonded to each other, and how the hydrocarbon groups are bonded to each other is similar to that in the case of R¹¹ to R¹³.

When two or more of R⁴¹, R⁴², R⁴³, and R⁴⁴ in the general formula (1)-14 are hydrocarbon groups, these hydrocarbon groups may be bonded to each other to form a ring together with nitrogen atoms to which these hydrocarbon groups are bonded and a carbon atom bonded to these nitrogen atoms (the same carbon atom to which three nitrogen atoms are bonded together). Here, "two or more hydrocarbon groups are bonded to each other" means a similar one to the case where any of the hydrocarbon groups of R¹¹ to R¹³ are bonded to each other as described above. Examples of a case of such bonding include a case where only two, three, or all (four) of R⁴¹ to R⁴⁴ are hydrocarbon groups and only any two or three hydrocarbon groups are bonded to each other, and a case where all (four) of R⁴¹ to R⁴⁴ are hydrocarbon groups and all these hydrocarbon groups are bonded to each other, and how the hydrocarbon groups are bonded to each other is similar to that in the case of R¹¹ to R¹³.

The compound represented by the general formula (1) is classified into a compound represented by the following general formula (1)-1 (hereinafter, also referred to as "compound (1)-1"), a compound represented by the following general formula (1)-2 (hereinafter, also referred to as "compound (1)-2"), a compound represented by the following general formula (1)-3 (hereinafter, also referred to as "compound (1)-3"), and a compound represented by the following general formula (1)-4 (hereinafter, also referred to as "compound (1)-4").

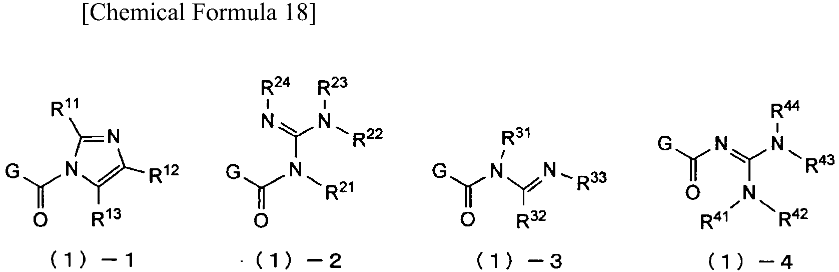

In the general formulas (1)-1 to (1)-4, G, R¹¹, R¹², R¹³, R²¹, R²², R²³, R²⁴, R³¹, R³², R³³, R⁴¹, R⁴², R⁴³, and R⁴⁴ have the same meanings as described above, and preferable forms thereof are also the same.

Preferable examples of the compound (1)-1 include a compound represented by the following general formula (1)-1A (hereinafter, also abbreviated as "compound (1)-1A") and a compound represented by the following general formula (1)-1B (hereinafter, also abbreviated as "compound (1)-1B").

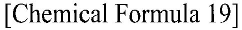

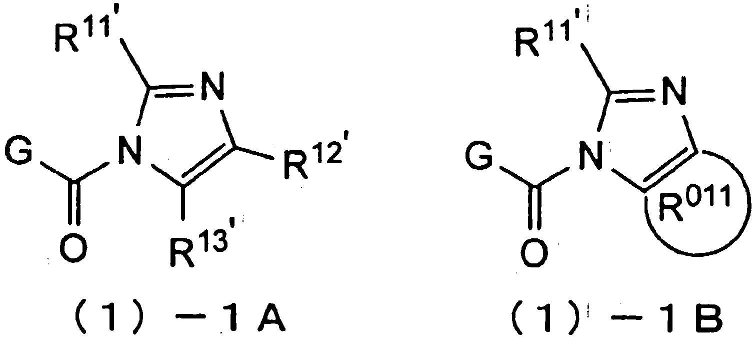

In the general formulas (1)-1A and (1)-1B, G is the same as described above, R¹¹', R¹²', and R¹³' are each independently a hydrogen atom or a hydrocarbon group, and R⁰¹¹ is a hydrocarbon ring.

In the general formulas (1)-1A and (1)-1B, R¹¹', R¹²', and R¹³' are each independently a hydrogen atom or a hydrocarbon group.

The hydrocarbon groups in R¹¹', R¹²', and R¹³' are the same as the hydrocarbon groups in R¹¹ to R¹³ described above except that the hydrocarbon groups in R¹¹', R¹²', and R¹³' are not bonded to each other to form a ring. That is, the compound (1)-1A does not have a structure in which the imidazole skeleton described in the general formula (1)-1A is condensed regardless of the groups of R¹¹', R¹²', and R¹³'.

R¹¹', R¹²', and R¹³' are each preferably a hydrogen atom, an alkyl group, or an aryl group.

In the general formula (1)-1B, R⁰¹¹ is a hydrocarbon ring. That is, in the general formula (1)-1B, R⁰¹¹ is a hydrocarbon ring (cyclic hydrocarbon group) which shares two adjacent carbon atoms in the imidazole skeleton with this imidazole skeleton and is condensed with this imidazole skeleton.

The compound (1)-1B is a compound (1)-1 in which R¹² and R¹³, which are hydrocarbon groups, are bonded to each other to form a ring.

R⁰¹¹ may be either monocyclic or polycyclic, and is preferably a saturated aliphatic hydrocarbon ring such as a cyclohexane ring or an aromatic hydrocarbon ring such as a benzene ring or a naphthalene ring.

Preferable examples of the compound (1)-1A include a compound in which at least one of R¹¹', R¹²', and R¹³' is a hydrogen atom.

Preferable examples of the compound (1)-1B include a compound in which R⁰¹¹ is an aromatic hydrocarbon ring.

Preferable examples of the compound (1)-2 include a compound represented by the following general formula (1)-2A (hereinafter, also referred to as "compound (1)-2A"), a compound represented by the following general formula (1)-2B (hereinafter, also referred to as "compound (1)-2B"), a compound represented by the following general formula (1)-2C (hereinafter, also referred to as "compound (1)-2C"), a compound represented by the following general formula (1)-2D (hereinafter, also referred to as "compound (1)-2D"), and a compound represented by the following general formula (1)-2E (hereinafter, also referred to as "compound (1)-2E").

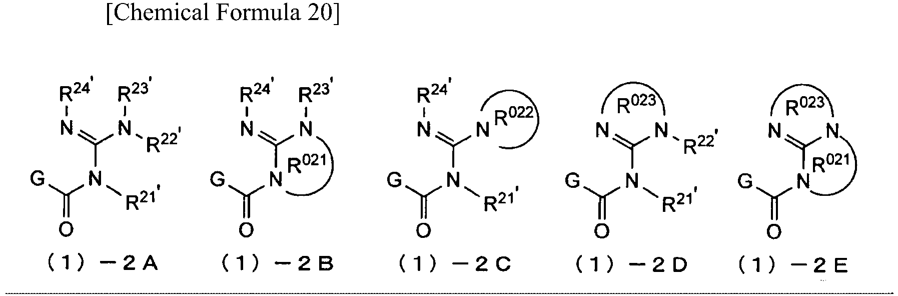

In the general formulas (1)-2A to (1)-2E, G is the same as described above, R²¹', R²²', R²³', and R²⁴, are each independently a hydrogen atom or a hydrocarbon group, and R⁰²¹, R⁰²², and R⁰²³ are each independently a nitrogen-containing ring.

In the general formulas (1)-2A to (1)-2E, R²¹', R²²', R²³', and R²⁴' are each independently a hydrogen atom or a hydrocarbon group.

The hydrocarbon groups in R²¹', R²²', R²³', and R²⁴' are the same as the hydrocarbon groups in R¹¹ to R¹³ described above except that the hydrocarbon groups in R²¹', R²²', R²³', and R²⁴' are not bonded to each other to form a ring.

R²¹', R²²', R²³', and R²⁴' are each preferably a hydrogen atom, an alkyl group, or an aryl group, and more preferably an alkyl group or an aryl group.

In the general formula (1)-2B, R⁰²¹ is a nitrogen-containing ring. Note that, in the present specification, the "nitrogen-containing ring" means a cyclic structure having a nitrogen atom in addition to a carbon atom and a hydrogen atom. That is, in the general formula (1)-2B, R⁰²¹ is a ring structure (nitrogen-containing cyclic group) having a nitrogen atom bonded to a carbon atom of a carbonyl group described in this general formula, a nitrogen atom to which R²³, is bonded, and one carbon atom located between these two nitrogen atoms as constituent atoms of a ring skeleton. R⁰²¹ may be either monocyclic or polycyclic, and is usually an aliphatic nitrogen-containing ring.

The compound (1)-2B is a compound (1)-2 in which R²¹ and R²², which are hydrocarbon groups, are bonded to each other to form a ring.

In the general formula (1)-2C, R⁰²² is a nitrogen-containing ring. That is, in the general formula (1)-2C, R⁰²² is a ring structure (nitrogen-containing cyclic group) having one nitrogen atom to which R²¹' and R²⁴' are not bonded among three nitrogen atoms described in this general formula as a constituent atom of a ring skeleton. R⁰²² may be either monocyclic or polycyclic, and may be either an aliphatic nitrogen-containing ring or an aromatic nitrogen-containing ring.

The compound (1)-2C is a compound (1)-2 in which R²² and R²³, which are hydrocarbon groups, are bonded to each other to form a ring.

In the general formula (1)-2D, R⁰²³ is a nitrogen-containing ring. That is, in the general formula (1)-2D, R⁰²³ is a ring structure (nitrogen-containing cyclic group) having two nitrogen atoms to which R²¹' is not bonded among three nitrogen atoms described in this general formula and one carbon atom located between these two nitrogen atoms as constituent atoms of a ring skeleton. R⁰²³ may be either monocyclic or polycyclic, and may be either an aliphatic nitrogen-containing ring or an aromatic nitrogen-containing ring.

The compound (1)-2D is a compound (1)-2 in which R²³ and R²⁴, which are hydrocarbon groups, are bonded to each other to form a ring.

In the general formula (1)-2E, R⁰²¹ and R⁰²³ are nitrogen-containing rings, R⁰²¹ is the same as R⁰²¹ in the general formula (1)-2B, and R⁰²³ is the same as R⁰²³ in the general formula (1)-2D.

The compound (1)-2E is a compound (1)-2 in which R²¹ and R²², which are hydrocarbon groups, are bonded to each other to form a ring, and R²³ and R²⁴, which are hydrocarbon groups, are bonded to each other to form a ring.

Preferable examples of the compound (1)-2A include a compound in which all of R²¹', R²²', R²³', and R²⁴' are alkyl groups or aryl groups.

Preferable examples of the compound (1)-2C include a compound in which R⁰²² is an aliphatic nitrogen-containing ring.

Preferable examples of the compound (1)-2D include a compound in which R⁰²³ is an aliphatic nitrogen-containing ring.

Preferable examples of the compound (1)-2E include a compound in which R⁰²³ is an aliphatic nitrogen-containing ring (a compound in which both R⁰²¹ and R⁰²³ are aliphatic nitrogen-containing rings).

Preferable examples of the compound (1)-3 include a compound represented by the following general formula (1)-3A (hereinafter, also referred to as "compound (1)-3A"), a compound represented by the following general formula (1)-3B (hereinafter, also referred to as "compound (1)-3B"), a compound represented by the following general formula (1)-3C (hereinafter, also referred to as "compound (1)-3C"), and a compound represented by the following general formula (1)-3D (hereinafter, also referred to as "compound (1)-3D").

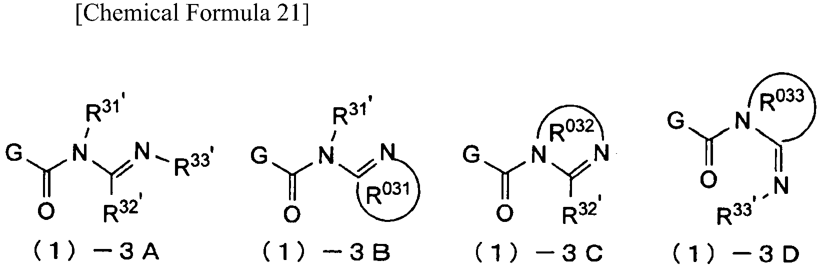

In the general formulas (1)-3A to (1)-3D, G is the same as described above, R³¹', R³²', and R³³, are each independently a hydrogen atom or a hydrocarbon group, and R⁰³¹, R⁰³², and R⁰³³ are each independently a nitrogen-containing ring.

In the general formulas (1)-3A to (1)-3D, R³¹', R³²', and R³³' are each independently a hydrogen atom or a hydrocarbon group.

The hydrocarbon groups in R³¹', R³²', and R³³' are the same as the hydrocarbon groups in R¹¹ to R¹³ described above except that the hydrocarbon groups in R³¹', R³²', and R³³' are not bonded to each other to form a ring.

R³¹', R³²', and R³³' are each preferably a hydrogen atom, an alkyl group, or an aryl group.

In the general formula (1)-3B, R⁰³¹ is a nitrogen-containing ring.

That is, in the general formula (1)-3B, R⁰³¹ is a ring structure (nitrogen-containing cyclic group) having one nitrogen atom to which R³¹' is not bonded among two nitrogen atoms described in this general formula and one carbon atom located between these two nitrogen atoms as constituent atoms of a ring skeleton. R⁰³¹ may be either monocyclic or polycyclic, and may be either an aliphatic nitrogen-containing ring or an aromatic nitrogen-containing ring.

The compound (1)-3B is a compound (1)-3 in which R³² and R³³, which are hydrocarbon groups, are bonded to each other to form a ring.

In the general formula (1)-3C, R⁰³² is a nitrogen-containing ring.

That is, in the general formula (1)-3C, R⁰³² is a ring structure (nitrogen-containing cyclic group) having two nitrogen atoms described in this general formula and one carbon atom located between these two nitrogen atoms as constituent atoms of a ring skeleton. R⁰³² may be either monocyclic or polycyclic, and may be either an aliphatic nitrogen-containing ring or an aromatic nitrogen-containing ring.

The compound (1)-3C is a compound (1)-3 in which R³¹ and R³³, which are hydrocarbon groups, are bonded to each other to form a ring.

In the general formula (1)-3D, R⁰³³ is a nitrogen-containing ring.

That is, in the general formula (1)-3D, R⁰³³ is a ring structure (nitrogen-containing cyclic group) having one nitrogen atom to which R³³' is not bonded among two nitrogen atoms described in this general formula and one carbon atom located between these two nitrogen atoms as constituent atoms of a ring skeleton. R⁰³³ may be either monocyclic or polycyclic, and is usually an aliphatic nitrogen-containing ring.

The compound (1)-3D is a compound (1)-3 in which R³¹ and R³², which are hydrocarbon groups, are bonded to each other to form a ring.

Preferable examples of the compound (1)-3A include a compound in which at least one of R³¹', R³²', and R³³' is a hydrogen atom.

Preferable examples of the compound (1)-3B include a compound in which R⁰³¹ is an aliphatic nitrogen-containing ring.

Preferable examples of the compound (1)-3C include a compound in which R⁰³² is an aliphatic nitrogen-containing ring.

Preferable examples of the compound (1)-4 include a compound represented by the following general formula (1)-4A (hereinafter, also referred to as "compound (1)-4A"), a compound represented by the following general formula (1)-4B (hereinafter, also referred to as "compound (1)-4B"), a compound represented by the following general formula (1)-4C (hereinafter, also referred to as "compound (1)-4C"), a compound represented by the following general formula (1)-4D (hereinafter, also referred to as "compound (1)-4D"), and a compound represented by the following general formula (1)-4E (hereinafter, also referred to as "compound (1)-4E").

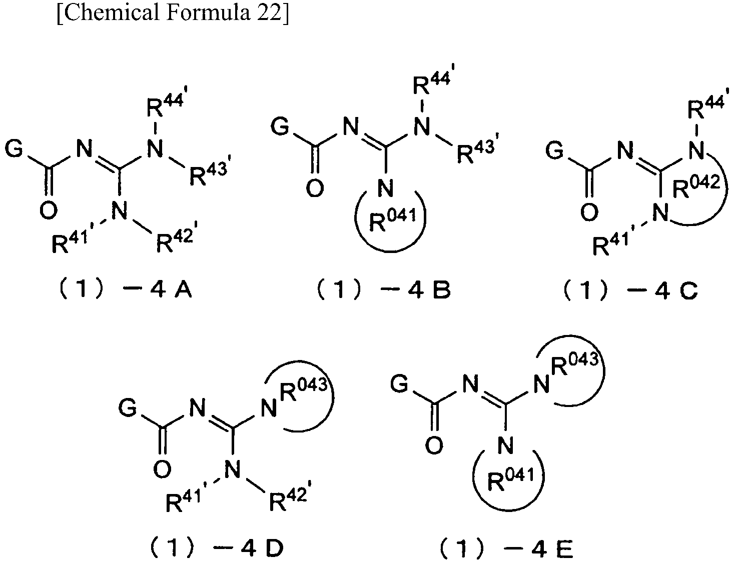

In the general formulas (1)-4A to (1)-4E, G is the same as described above, R⁴¹', R⁴²', R⁴³', and R⁴⁴' are each independently a hydrogen atom or a hydrocarbon group, and R⁰⁴¹, R⁰⁴², and R⁰⁴³ are each independently a nitrogen-containing ring.

In the general formulas (1)-4A to (1)-4E, R⁴¹', R⁴²', R⁴³', and R⁴⁴' are each independently a hydrogen atom or a hydrocarbon group.

The hydrocarbon groups in R⁴¹', R⁴²', R⁴³', and R⁴⁴' are the same as the hydrocarbon groups in R¹¹ to R¹³ described above except that the hydrocarbon groups in R⁴¹', R⁴²', R⁴³', and R⁴⁴' are not bonded to each other to form a ring.

In the general formulas (1)-4A to (1)-4E, R⁴¹', R⁴²', R⁴³', and R⁴⁴' are each preferably a hydrogen atom, an alkyl group, or an aryl group, and more preferably an alkyl group or an aryl group.

Preferable examples of the compound (1)-4A include a compound in which all of R⁴¹', R⁴²', R⁴³', and R⁴⁴' are alkyl groups or aryl groups.

Preferable examples of the compound (1)-4B include a compound in which R⁰⁴¹ is an aliphatic nitrogen-containing ring.

Preferable examples of the compound (1)-4D include a compound in which R⁰⁴³ is an aliphatic nitrogen-containing ring.

Preferable examples of the compound (1)-4E include a compound in which R⁰⁴¹ and R⁰⁴³ are aliphatic nitrogen-containing rings.

Among the compounds represented by the general formula (1), the compounds (1)-1A, (1)-2E, (1)-3A, and (1)-4A are more preferable, and the compound (1)-1A is still more preferable.

Specific examples of the compound represented by the general formula (1) include a compound represented by the following formula (1)-D. Note that the compound represented by the general formula (1) is not limited to the following compounds in the present disclosure.

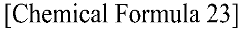

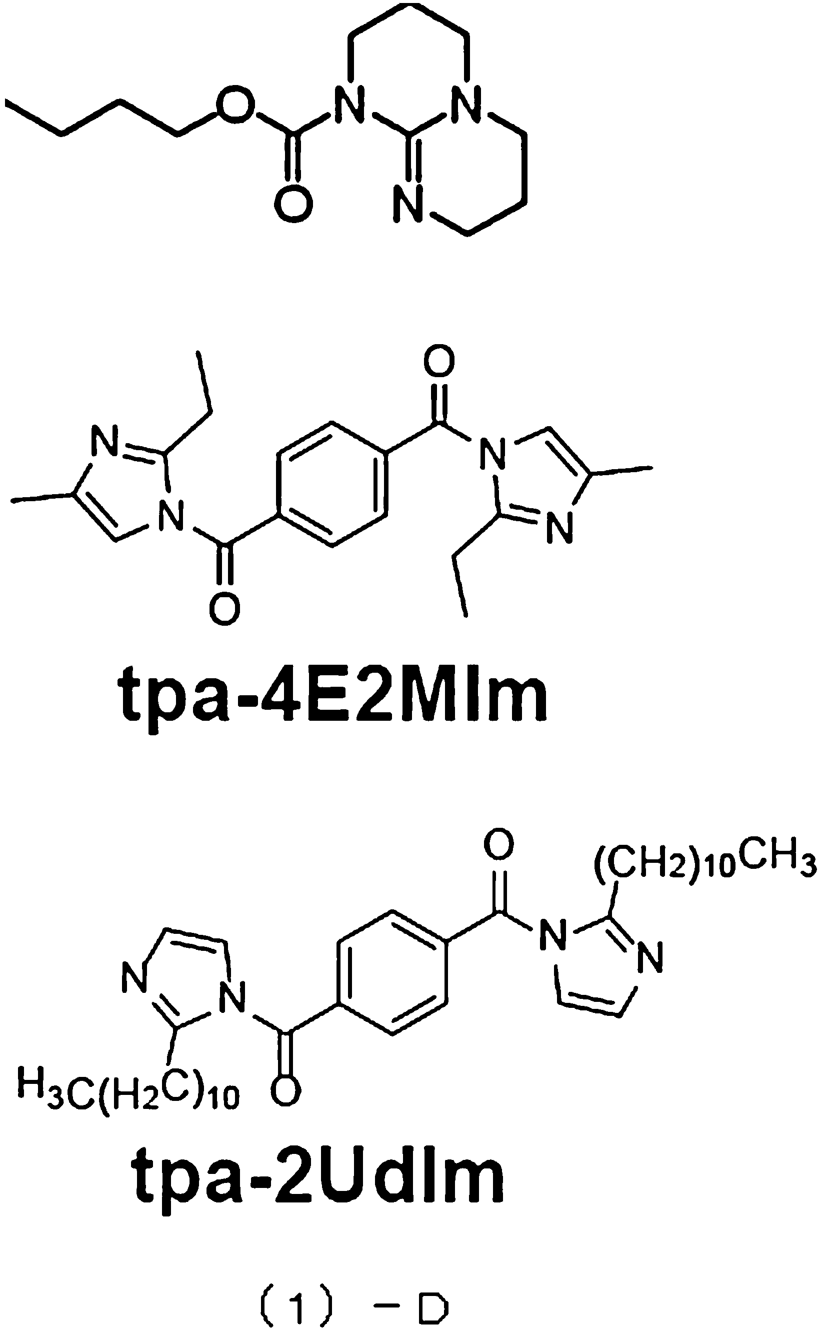

The compound represented by the general formula (1) can be manufactured, for example, using a known method for forming an ester structure or an amide structure.

As an example, tpa-4E2MIm in the formula (1)-D can be manufactured by mixing terephthalic acid dichloride (tpa-CL) and 2-ethyl-4-methylimidazole (4E2MIm) in the presence of an anhydrous organic solvent (for example, tetrahydrofuran). In addition, tpa-2UdIm in the formula (1)-D can be manufactured by heating and refluxing terephthalic acid dichloride (tpa-CL) and 2-undecylimidazole (2UdIm) in the presence of an anhydrous organic solvent (for example, acetone).

The base amplifier may be used singly or in combination of two or more types thereof.

When a curable composition containing a polysiloxane having an epoxy group and a base amplifier is cured, a base (a site corresponding to 4E2MIm in tpa-4E2MIm) generated from the base amplifier in the composition acts on the epoxy group of the polysiloxane, and is incorporated into a skeleton of the polysiloxane as a reaction product with the epoxy group. Then, a hydroxy group derived from the reaction product between the base and the epoxy group or a hydroxy group derived from the polysiloxane acts on the base amplifier, and generation of a base from the base amplifier and a reaction between the rest of the base amplifier and the hydroxy group (formation of an esterified product of a site corresponding to terephthalic acid and a hydroxy group in tpa-4E2MIm) occur. A curing reaction derived from the epoxy group proceeds in this manner, and an increase in the number of hydroxy groups contained in an obtained cured product of the polysiloxane is suppressed.

When a polysiloxane having an epoxy group is cured using a conventional curing agent, it is difficult to obtain low dielectric properties due to the presence of a hydroxy group generated with a progress of the curing reaction in addition to a hydroxy group derived from the polysiloxane. In this respect, since the base amplifier of the present disclosure can suppress an increase in the number of hydroxy groups after the curing reaction as described above, the curable composition of the present disclosure containing a predetermined polysiloxane and the base amplifier can provide a cured product having excellent low dielectric properties and the like.

The content of the base amplifier in the curable composition is preferably 1.0 to 20.0 parts by mass or 5.0 to 15.0 parts by mass when the content of the polysiloxane in the curable composition is 100 parts by mass.

### <<<Photoradical generator>>>

The photoradical generator is a compound that generates radicals by light irradiation (exposure), and can radically polymerize an unsaturated double bond of a polysiloxane by the generated radicals to enhance curability (developer resistance or the like) of an exposed portion.

As the photoradical generator, a known conventional photoradical generator can be used. Examples thereof include a benzoin ether-based photoradical generator, an acetophenone-based photoradical generator, an α-ketol-based photoradical generator, an aromatic sulfonyl chloride-based photoradical generator, a photoactive oxime-based photoradical generator, a benzoin-based photoradical generator, a benzyl-based photoradical generator, a benzophenone-based photoradical generator, a ketal-based photoradical generator, a thioxanthone-based photoradical generator, and an acylphosphine oxide-based photoradical generator.

Examples of the benzoin ether-based photoradical generator include benzoin methyl ether, benzoin ethyl ether, benzoin propyl ether, benzoin isopropyl ether, benzoin isobutyl ether, 2,2-dimethoxy-1,2-diphenylethane-1-one, and anisoin.

Examples of the acetophenone-based photoradical generator include 1-hydroxycyclohexyl phenyl ketone, 4-phenoxydichloroacetophenone, 4-t-butyl-dichloroacetophenone, 1-[4-(2-hydroxyethoxy)-phenyl]-2-hydroxy-2-methyl-1-propane-1-one, 2-hydroxy-2-methyl-1-phenyl-propane-1-one, and methoxyacetophenone.

Examples of the α-ketol-based photoradical generator include 2-methyl-2-hydroxypropiophenone and 1-[4-(2-hydroxyethyl)-phenyl]-2-hydroxy-2-methylpropane-1-one.

Examples of the aromatic sulfonyl chloride-based photoradical generator include 2-naphthalenesulfonyl chloride. Examples of the photoactive oxime-based photopolymerization initiator include 1-phenyl-1,2-propanedione-2-(O-ethoxycarbonyl)-oxime.

Examples of the benzoin-based photoradical generator include benzoin.

Examples of the benzyl-based photoradical generator include benzyl.

Examples of the benzophenone photoradical generator include benzophenone, benzoylbenzoic acid, 3,3'-dimethyl-4-methoxybenzophenone, polyvinyl benzophenone, and α-hydroxycyclohexyl phenyl ketone.

Examples of the ketal-based photoradical generator include benzyl dimethyl ketal.

Examples of the thioxanthone-based photoradical generator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, isopropylthioxanthone, 2,4-diisopropylthioxanthone, and dodecylthioxanthone.

Examples of the acylphosphine oxide-based photoradical generator include bis(2,6-dimethoxybenzoyl) phenylphosphine oxide, bis(2,6-dimethoxybenzoyl)(2,4,4-trimethylpentyl) phosphine oxide, bis(2,6-dimethoxybenzoyl)-n-butylphosphine oxide, bis(2,6-dimethoxybenzoyl)-(2-methylpropan-1-yl) phosphine oxide, bis(2,6-dimethoxybenzoyl)-(1-methylpropan-1-yl) phosphine oxide, bis(2,6-dimethoxybenzoyl)-t-butylphosphine oxide, bis(2,6-dimethoxybenzoyl) cyclohexylphosphine oxide, bis(2,6-dimethoxybenzoyl) octylphosphine oxide, bis(2-methoxybenzoyl)(2-methylpropan-1-yl) phosphine oxide, bis(2-methoxybenzoyl)(1-methylpropan-1-yl) phosphine oxide, bis(2,6-diethoxybenzoyl)(2-methylpropan-1-yl) phosphine oxide, bis(2,6-diethoxybenzoyl)(1-methylpropan-1-yl) phosphine oxide, bis(2,6-dibutoxybenzoyl)(2-methylpropan-1-yl) phosphine oxide, bis(2,4-dimethoxybenzoyl)(2-methylpropan-1-yl) phosphine oxide, bis(2,4,6-trimethylbenzoyl)(2,4-dipentoxyphenyl) phosphine oxide, bis(2,6-dimethoxybenzoyl) benzylphosphine oxide, bis(2,6-dimethoxybenzoyl)-2-phenylpropylphosphine oxide, bis(2,6-dimethoxybenzoyl)-2-phenylethylphosphine oxide, bis(2,6-dimethoxybenzoyl) benzylphosphine oxide, bis(2,6-dimethoxybenzoyl)-2-phenylpropylphosphine oxide, bis(2,6-dimethoxybenzoyl)-2-phenylethylphosphine oxide, 2,6-dimethoxybenzoylbenzylbutylphosphine oxide, 2,6-dimethoxybenzoylbenzyloctylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphine oxide, bis(2,4,6-trimethylbenzoyl)-2,4-di-n-butoxyphenylphosphine oxide, 2,4,6-trimethylbenzoyldiphenylphosphine oxide, bis(2,6-dimethoxybenzoyl)-2,4,4-trimethylpentylphosphine oxide, bis(2,4,6-trimethylbenzoyl) isobutylphosphine oxide, 2,6-dimethoxybenzoyl-2,4,6-trimethylbenzoyl-n-butylphosphine oxide, bis(2,4,6-trimethylbenzoyl) phenylphosphine oxide, bis(2,4,6-trimethylbenzoyl)-2,4-dibutoxyphenylphosphine oxide, 1,10-bis[bis(2,4,6-trimethylbenzoyl) phosphine oxide] decane, and tri(2-methylbenzoyl) phosphine oxide.

These photoradical generators may be used singly or in combination of two or more types thereof.

The content of the photoradical generator in the curable composition is preferably 0.1 to 10 parts by mass, and more preferably 1 to 5 parts by mass when the content of the polysiloxane in the curable composition is 100 parts by mass.

### <<<Other components>>>

The curable composition of the present disclosure may contain other components. As the other components, for example, an inorganic filler such as silica, a peroxide such as α,α'-bis(t-butylperoxy-m-isopropyl) benzene, a resin and a polymer component such as a maleimide resin or a styrene-based elastomer, a sensitizer, an adhesion aid, a surfactant, a leveling agent, a plasticizer, an adhesive, a colorant, a fiber, a silane coupling agent, a flame retardant, a cellulose nanofiber, a dispersant, a thermosetting catalyst, a thickener, an antifoaming agent, an antioxidant, a rust inhibitor, an adhesion imparting agent, or an organic solvent may be contained. These components only need to be blended in appropriate amounts according to an application and the like.

### <<<<Method for using curable composition>>>>

The curable composition according to the present embodiment can be suitably used for, for example, formation of an insulating layer by thermal curing or a negative photolithography method by thermal photocuring. Hereinafter, a method for manufacturing a pattern film by applying the curable composition according to the present embodiment to a negative photolithography method will be described.

First, as Step 1, the curable composition is applied onto a substrate and dried to form a resin layer, or a dry film is laminated on a substrate to transfer a resin layer made of the curable composition. As a method for applying the curable composition onto a substrate, a method conventionally used for applying the curable composition, for example, a method for applying the curable composition with a spin coater, a bar coater, a blade coater, a curtain coater, a screen printer, or the like, a method for spray-applying the curable composition with a spray coater, and an inkjet method can be used.

As a method for drying a coating film, a method such as air blow drying, heat drying by an oven or a hot plate, or vacuum drying is used. Drying conditions of the coating film are not particularly limited, but natural drying, air blow drying, or heat drying can be performed at 60 to 130°C for one to 30 minutes.

The substrate is not particularly limited, and can be widely applied to a semiconductor substrate such as a silicon wafer, a wiring substrate, and substrates made of various resins, metals, and the like.

Next, as Step 2, the resin layer formed on the substrate is irradiated (exposed) with light through a photomask having a pattern or directly in a pattern shape. Note that, in the method for laminating a dry film, a film material is peeled off, and exposure is performed. When the film material has light transmittance, exposure may be performed while the film material is left on the resin layer, and then the film material may be peeled off. In the exposure, light having a wavelength capable of activating a photoradical polymerization initiator is used. Specifically, light having a maximum absorption wavelength in a range of 350 to 410 nm is preferable. As an exposure device, a contact aligner, a mirror projection, a stepper, a laser direct exposure device, or the like can be used.

Next, as Step 3, the resin layer is treated with a developer. As a result, an unexposed portion of the resin layer can be removed to form a pattern film. After the development, the resin layer may be washed with a rinse liquid as necessary.

As a method used for the development, any method can be selected from a conventionally known method for developing a photoresist, for example, a rotation spraying method, a paddle method, and an immersion method with ultrasonic treatment.

As the developer, a solvent that dissolves a polysiloxane as a main component of the curable composition can be used, and it is preferable to use an organic solvent in order to prevent corrosion of a circuit and the like. For example, a solvent such as chloroform, methylene chloride, toluene, N-methyl-2-pyrrolidone (NMP), tetrahydrofuran (THF), cyclohexanone, propylene glycol monomethyl ether acetate (PMA), diethylene glycol monoethyl ether acetate (CA), methyl ethyl ketone, or ethyl acetate can be used. The developer may be used singly or in combination of two or more types thereof.

In addition, a solvent other than the organic solvent described above can be combined with the developer from a viewpoint of adjusting a developing speed, and an appropriate amount of a surfactant or the like may be contained in the developer as necessary.

Examples of the rinse liquid include distilled water, methanol, ethanol, and isopropyl alcohol.

As Step 4, the pattern film may be heated as necessary. A heating temperature is not particularly limited, but for example, heating at 100 to 220°C for about 30 to 120 minutes is performed. As an atmosphere (gas) at this time, air may be used, or an inert gas such as nitrogen or argon may be used.

### <<<<Application»»

The curable composition according to the present disclosure can be used for various applications. In particular, a cured product obtained using the curable composition according to the present disclosure is excellent in low dielectric properties, and thus can be preferably used as a material constituting an electronic component. More specifically, a cured product obtained using the curable composition according to the present disclosure can be preferably used as an insulating material in an electronic component of large-capacity and high-speed communication typified by a fifth generation communication system (5G) or a millimeter wave radar for an advanced driver-assistance system (ADAS) of automobiles.

### Examples

Hereinafter, a curable composition will be specifically described with reference to Examples, but the present invention is not limited thereto.

### <<<Curable composition>>>

### <<Raw materials>>

### <Polysiloxane>

3-Glycidyloxypropyltrimethoxysilane (GPTS) and 3-(trimethoxysilyl) propyl acrylate (APTS) represented by the following formulas were used as monomers.

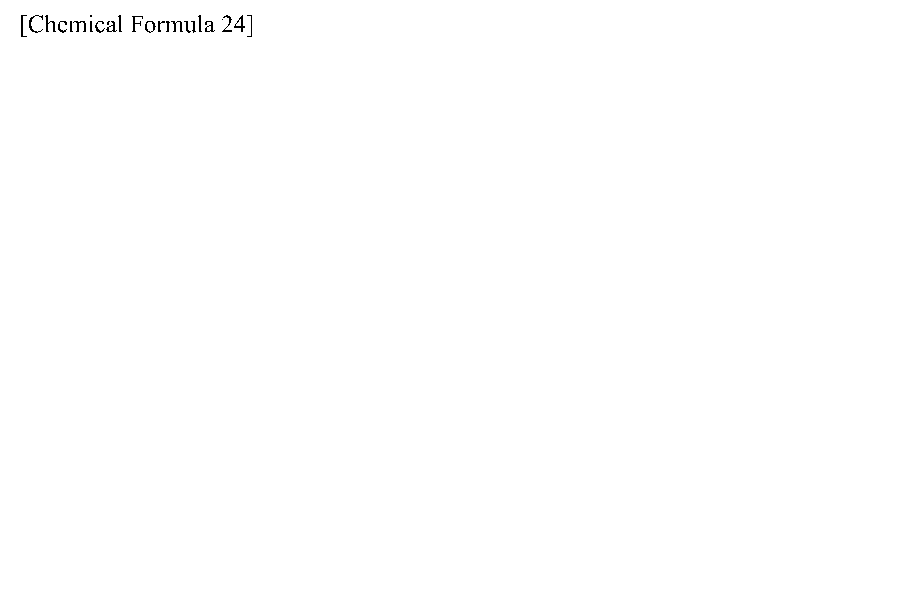

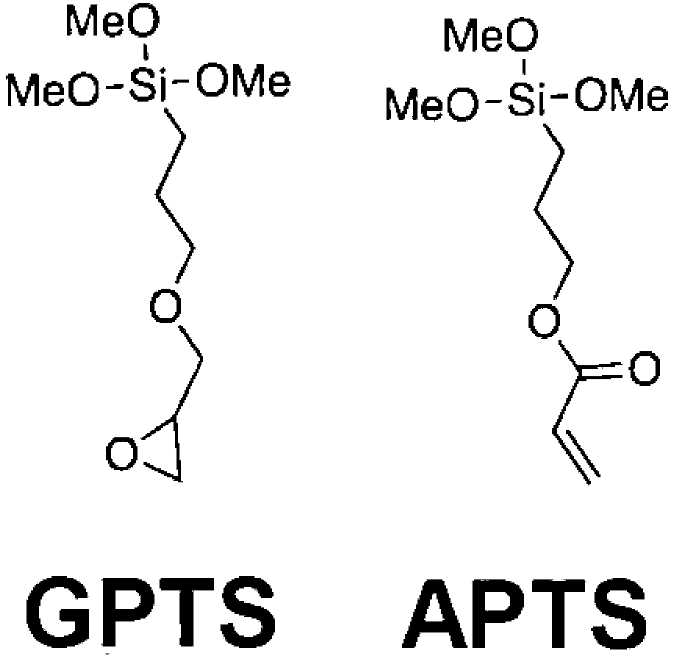

Partial hydrolysis and condensation reaction were performed under anhydrous methanol using hydrochloric acid as a catalyst such that molar ratios of GPTS and APTS were equal to obtain GPTS_{0.5}-APTS_{0.5} represented by the following formula.

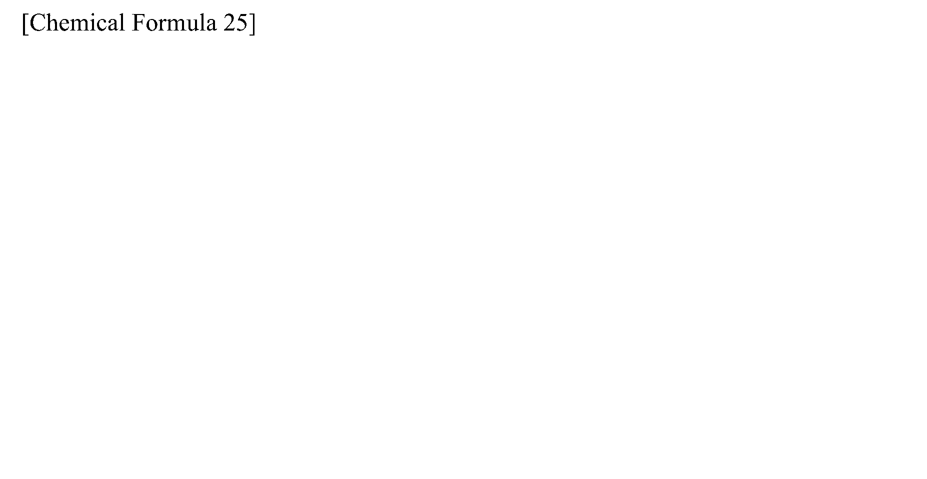

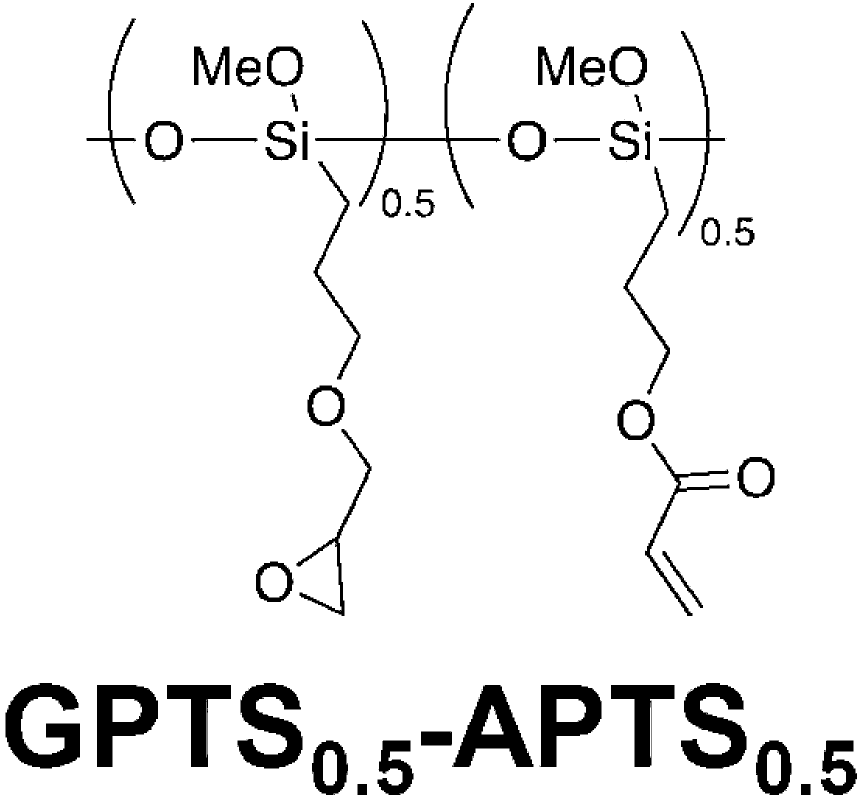

The obtained GPTS_{0.5}-APTS_{0.5} had a weight average molecular weight of 21,000 and a polydispersity index (weight average molecular weight/number average molecular weight) of 1.7.

### <Base amplifier>

tpa-2E4MIm synthesized using terephthalic acid dichloride and 2-ethyl-4-methylimidazole as raw materials was used.

### <Photoradical generator>

As a photoradical generator, Omnirad 819 (manufactured by IGM Resin) which is an acylphosphine oxide-based photopolymerization initiator was used.

### <<Preparation of curable composition>>

### <Example 1>

GPTS_{0.5}-APTS_{0.5} (80 mg) was dissolved in chloroform (0.37 g), and tpa-2E4MIm (9.0 mg) and Omnirad 819 (5.1 mg) were added thereto to prepare a varnish of a curable composition according to Example 1.

### <<<Evaluation>>

### <<Dielectric properties>>

Each curable composition was applied to a glossy surface of a copper foil having a thickness of 18 µm by an applicator such that a film thickness thereof after drying was 30 µm, and dried in a hot air circulating drying furnace at 90°C for five minutes. Next, the curable composition was cured at 220°C for one hour in an inert oven, and then the copper foil was etched to obtain a cured product (cured film) made of each composition.

The prepared cured film was cut to a length of 80 mm and a width of 45 mm to obtain a test piece, and a relative permittivity Dk thereof was measured by a split post dielectric resonator (SPDR) resonator method. As a measuring instrument, a vector network analyzer E5071C manufactured by Keysight Technology LLC and an SPDR resonator were used, and a calculation program manufactured by QWED was used. As conditions, a frequency of 10 GHz and a measurement temperature of 25°C were set.

As Reference Example, dielectric properties of a cured film obtained by curing an epoxy resin (HP-7200) using an active ester resin (EPICLON HPC-8000-65T) generally considered to be excellent in low dielectric properties were measured.

The cured film according to Example 1 had a relative permittivity Dk of 2.52. On the other hand, the cured film according to Reference Example had a relative permittivity Dk of 3.4. From the above results, it is understood that the cured film according to Example 1 has excellent dielectric properties.

### <<Developability>>

The varnish of the curable composition according to Example 1 was applied onto a silicon wafer using a spin coater such that a film thickness thereof after drying was about 3 µm, and dried on a hot plate at 60°C for three minutes to form a resin layer made of each curable composition. Thereafter, the silicon wafer on which the resin layer was formed was cut into a shape of 2.5 × 15 cm to prepare a test sample for photosensitivity and developability. The resin layer of each test sample was irradiated with light having a wavelength of 365 nm at 200 mJ/cm² as an integrated light amount, and was immersed in propylene glycol monomethyl ether acetate (PEGMA) for 20 seconds to be developed. Thereafter, the test sample was heat-treated at 170°C for 15 minutes on a hot plate to be thermally cured, and then a pattern was confirmed, whereby it was confirmed that a pattern having a line/space of 5 µm/5 µm was formed.

## Claims

1. A curable composition comprising: a polysiloxane having an epoxy group; and a compound represented by the following formula (1): 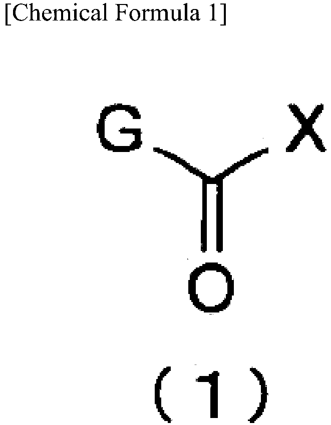
in which G represents an organic group, and X represents a group represented by the following general formula (1)-11, (1)-12, (1)-13, or (1)-14: 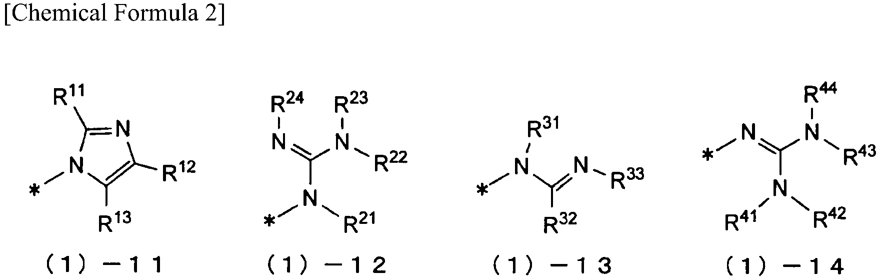
in which R¹¹, R¹², R¹³, R²¹, R²², R²³, R²⁴, R³¹, R³², R³³, R⁴¹, R⁴², R⁴³, and R⁴⁴ each independently represent a hydrogen atom or a hydrocarbon group, when two or more of R¹¹, R¹², and R¹³ are hydrocarbon groups, the two or more hydrocarbon groups may be bonded to each other to form a ring, when two or more of R²¹, R²², R²³, and R²⁴ are hydrocarbon groups, the two or more hydrocarbon groups may be bonded to each other to form a ring, when two or more of R³¹, R³², and R³³ are hydrocarbon groups, the two or more hydrocarbon groups may be bonded to each other to form a ring, and when two or more of R⁴¹, R⁴², R⁴³, and R⁴⁴ are hydrocarbon groups, the two or more hydrocarbon groups may be bonded to each other to form a ring, and * represents a bond connected to a carbon atom.

2. The curable composition according to claim 1, wherein the polysiloxane has a functional group containing an unsaturated carbon bond.

3. The curable composition according to claim 2, further comprising a photoradical generator.

4. The curable composition according to claim 2, wherein the polysiloxane contains a structural unit represented by the following formula (I) and a structural unit represented by the following formula (II): 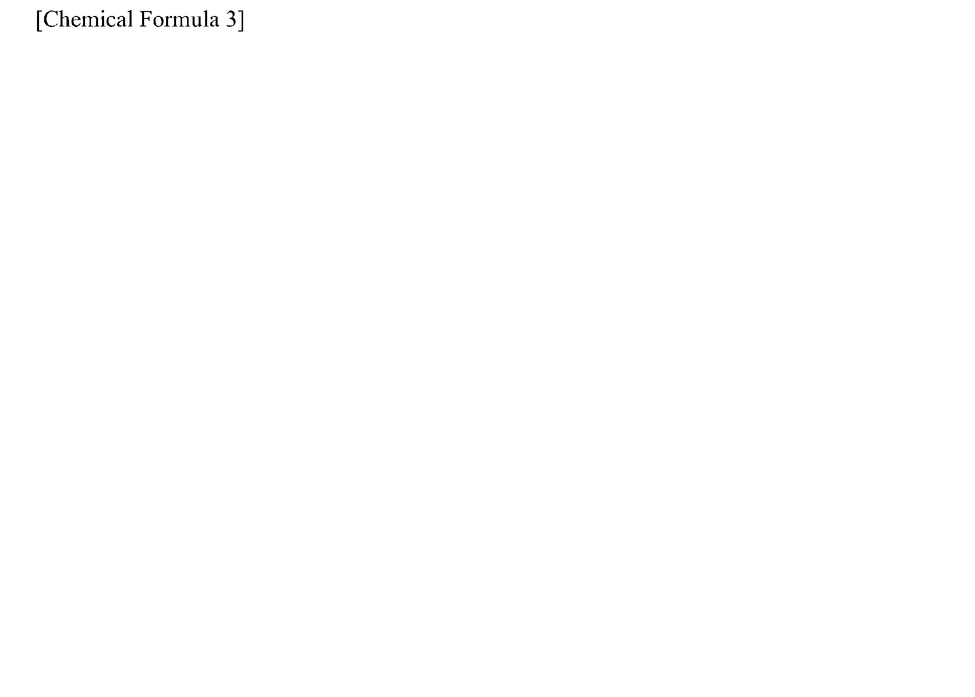 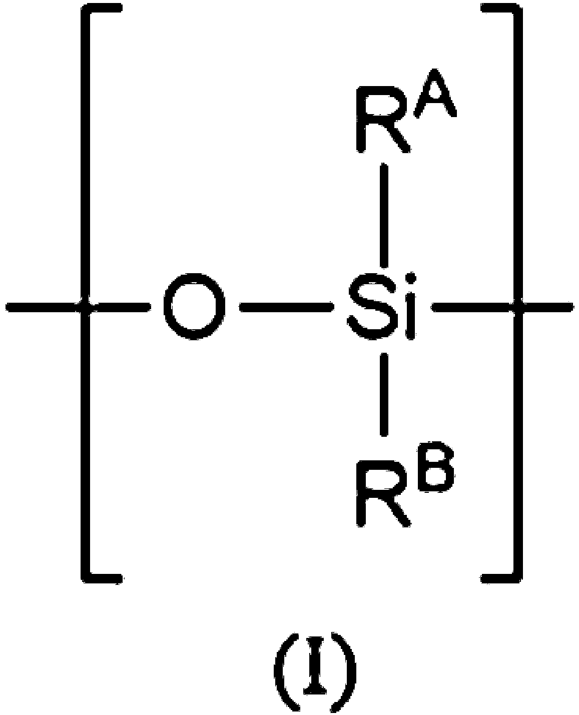
in which R^{A} represents a hydrogen atom, a hydroxy group, an alkoxy group, or a hydrocarbon group, and R^{B} represents a functional group containing an epoxy group. 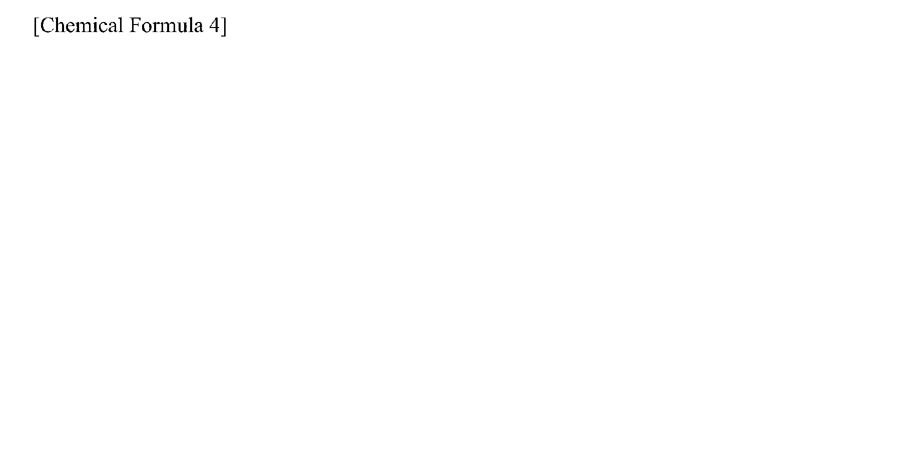 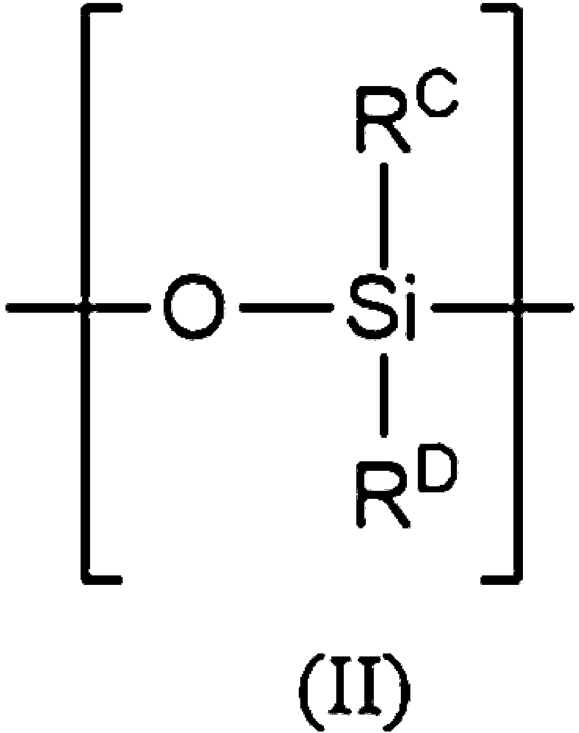
in which R^{C} represents a hydrogen atom, a hydroxy group, an alkoxy group, or a hydrocarbon group, and R^{D} represents a functional group containing an unsaturated double bond.
